Europäisches Patentamt

**European Patent Office**

Office européen des brevets

(11) Numéro de publication: **0 200 275**
**B1**

(12) **FASCICULE DE BREVET EUROPEEN**

(45) Date de publication du fascicule du brevet:
10.01.90

(51) Int. Cl.⁴: **H 04 J 3/16, H 04 B 1/16**

(21) Numéro de dépôt: 86200727.5

(22) Date de dépôt: 29.04.86

(54) Système de transmission d'informations par voie multiplex.

(30) Priorité: 03.05.85 FR 8506755

(43) Date de publication de la demande:
05.11.86 Bulletin 86/45

(45) Mention de la délivrance du brevet:
10.01.90 Bulletin 90/2

(84) Etats contractants désignés:
DE FR GB NL SE

(56) Documents cités:
EP-A- 0 092 219
EP-A- 0 132 406
GB-A- 2 115 195

ELECTRICAL COMMUNICATION, vol. 57, no. 3, 1982,
pages 228-235, Heidenheim, DE; A. BARBETTA et al.:
"Statistical time division multiplexer"
IEEE INTERNATIONAL SWITCHING SYMPOSIUM,
Montreal, CA, 21-24 septembre 1981, vol. 4, session
41C, papier 6, pages 1-5; New York, US; C.R. GARNIER
et al.: "The IRT 1500, a digital system serving rural zone
subscribers by TDMA radio"

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Fino, Bernard, SOCIETE CIVILE
S.P.I.D. 209, rue de l'Université, F-75007 Paris (FR)**
Inventeur: **Forestier, Alain Bernard René, SOCIETE
CIVILE S.P.I.D. 209, rue de l'Université, F-75007 Paris
(FR)**
Inventeur: **Le Goffic, Yves Henri Marcel, SOCIETE
CIVILE S.P.I.D. 209, rue de l'Université, F-75007 Paris
(FR)**

(74) Mandataire: **Chaffraix, Jean et al, Société Civile
S.P.I.D. 209, rue de l'Université, F-75007 Paris (FR)**

ACTORUM AG

## Description

La présente invention concerne un système de transmission d'informations entre au moins deux stations pour transmettre des informations de voies libres ou occupées, chaque station disposant d'au moins un circuit émetteur et un circuit récepteur radio alimentés au moyen d'une source d'alimentation et de moyens pour détecteur les voies libres ou occupées.

Un tel système est connu et décrit dans la publication «COMMUTATION ET TRANSMISSION», n° 3 de Septembre 1981, le titre de l'article étant «Système de téléphonie rurale IRT 1500». L'article présente un système numérique de téléphonie rurale pour de faibles densités de trafic dans lequel une station centrale et des stations distantes sont reliées par voie radio. Dans le système IRT 1500 les stations distantes se trouvent en général dans des lieux retirés, souvent dépourvus de réseau électrique. Il est donc fréquemment nécessaire de les alimenter à partir de l'énergie solaire. De ce fait il est essentiel de limiter la consommation des différentes stations, le choix technique d'une technologie CMOS dans la conception du matériel est un exemple de moyen de réduire cette consommation.

Cependant, force est de constater que les équipements des stations tels que les circuits émetteurs et récepteurs restent toujours alimentés et consomment de l'énergie même lorsqu'il y a peu ou pas d'informations à transmettre, par exemple, pendant les heures de très faibles densités de trafic et notamment durant la nuit.

L'invention a pour but de remédier à cet inconvénient et propose des moyens pour réduire de façon très sensible la consommation d'énergie.

Pour cela le système de transmission d'informations du genre mentionné dans le préambule est remarquable en ce qu'il possède des moyens coopérant avec les moyens de détection pour mettre en oeuvre un procédé pour élaborer un multiplex temporel formé d'une trame élémentaire de durée T, dans lequel les informations provenant des voies occupées sont regroupées côte à côte dans ladite trame élémentaire et des moyens pour réduire la consommation du circuit émetteur et du circuit récepteur à partir de la détection de voies libres et pour alimenter normalement le circuit émetteur et le circuit récepteur à partir de la détection de voies occupées.

L'idée de l'invention repose sur le fait que pour économiser sensiblement l'énergie des différentes stations, les circuits émetteurs et les circuits récepteurs ne doivent fonctionner uniquement que lorsqu'il y a des informations utiles à transmettre.

D'autre part la trame multiplex est organisée de telle manière que les voies utilisées en permanence, c'est à dire les voies dites de service (rythme, synchronisation, signalisations, ...) et les voies affectées à la demande dites occupées sont regroupées par exemple au début de la trame multiplex, ce qui a pour effet, en cas de faible trafic, de présenter un grand nombre de voies contiguës inutilisées en fin de trame. Dès qu'une voie se libère, elle est utilisée en priorité lorsqu'une nouvelle affectation est demandée. Dans les voies de signalisations sont transmises des informations qui permettent de connaître quelles sont les voies utilisées et le numéro de la dernière voie utilisée dans la trame. Les circuits émetteurs et récepteurs peuvent donc être coupés à partir de la dernière voie utilisée, toutefois ils devront être réactivés avant le début de la nouvelle trame afin de tenir compte de leur temps de réponse.

Cependant si le temps de réponse des circuits émetteurs et récepteurs est inférieur à la durée T d'une trame multiplex, il est néanmoins du même ordre de grandeur et l'économie d'énergie ainsi obtenue est relativement faible. Pour cela et pour accroître très sensiblement l'économie d'énergie, il fait réduire l'influence du temps de réponse des circuits émetteurs et récepteurs.

C'est dans cet objectif que l'invention propose des moyens pour réduire l'influence du temps de réponse des circuits émetteurs et récepteurs. Selon une autre caractéristique de l'invention, le système de transmission d'informations, dans lequel les trames multiplex élémentaires transportent des informations relatives à des voies de service et des informations relatives à des voies de données, est remarquable en ce qu'il comporte en outre des moyens pour regrouper les trames multiplex élémentaires n par n, les voies de service et les voies de données occupées étant regroupées n par n et côte à côte dans la nouvelle trame obtenue.

Ainsi dans cette nouvelle organisation du multiplex, la nouvelle trame comprend plusieurs (n) trames élémentaires et les voies de même rang sont regroupées côte à côte n par n. Les voies utilisées sont toujours rassemblées côte à côte et par exemple en début de trame. De ce fait le temps de réponse des circuits émetteurs et récepteurs, qui lui, est resté constant, est rendu quasiment négligeable relativement à la durée nT de la nouvelle trame et aux nombres d'intervalles de temps inoccupés, l'économie en énergie peut alors être très conséquente.

La description suivante en regard des dessins annexés, donnés à titre d'exemple, fera bien comprendre comment l'invention peut être réalisée.

La figure 1 montre de manière schématique un système de transmission selon l'invention.

La figure 2 représente un multiplex comportant des voies libres et des voies occupées.

La figure 3 représente la transformation d'une trame élémentaire en une trame allongée.

La figure 4 propose un schéma synoptique d'une station centrale.

La figure 5 propose un schéma synoptique d'une station distante.

La figure 6 décrit un procédé mis en oeuvre pour regrouper selon une configuration donnée les voies occupées dans le multiplex.

Les figures 7 et 8 proposent un schéma synoptique d'un dispositif de transformation du multiplex et de commande de circuit émetteur.

Les figures 9 et 10 proposent un schéma synoptique d'un dispositif de retransformation du multiplex et de commande de circuit récepteur.

La figure 11 montre une variante du système de transmission selon l'invention mettant en oeuvre plus de deux stations.

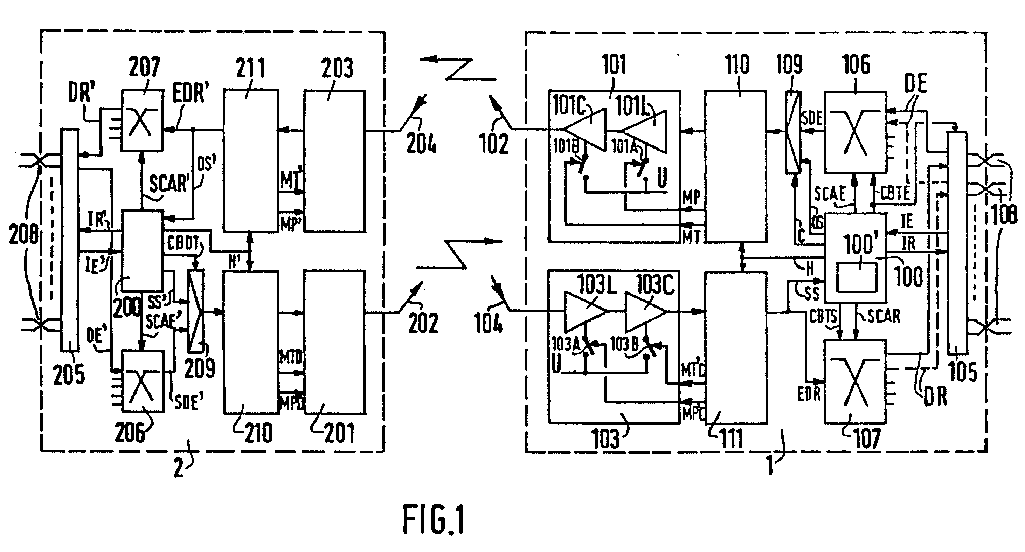

Sur la figure 1 est montré de manière schématique un système de transmission d'informations dans lequel est utilisée l'invention. Un tel système a pour fonctions essentielles de concentrer le trafic téléphonique et de transmettre ce trafic, de manière totalement transparente, par voie hertzienne entre une station centrale 1 rattachée à un central téléphonique (non représenté sur la figure) et au moins une station distante 2 associée à un groupe d'abonnés.

La station centrale 1 est sous le contrôle d'un dispositif de commande et de mémorisation 100 gérant et mémorisant des informations à transmettre par voie radio vers la station distante 2 au moyen du circuit émetteur 101 et de son antenne 102 et des informations reçues par le circuit récepteur 103 et son antenne 104 provenant de la station distante 2. Les circuits émetteur 101 et récepteur 103 sont alimentés au moyen d'une source d'alimentation U.

Le circuit émetteur 101 possède des organes 101L qui, à la commande de mise en marche, ont des temps de réponse importants (de l'ordre de 100 µs, tels qu'un oscillateur local, un synthétiseur...) et des organes 101C qui ont des temps de réponse plus courts (de l'ordre de 20 µs pour un modulateur, et beaucoup moins pour un amplificateur). De même le circuit récepteur 103 possède des organes 103L ayant des temps de réponse importants lors de la mise en marche (tels qu'un oscillateur local, un synthétiseur...) et des organes 103C dont les temps de réponse sont plus courts (tels qu'un démodulateur, un amplificateur...).

Un dispositif d'interface 105, synchrone du dispositif de commande et de mémorisation 100, signal CBTE, assure la liaison entre le dispositif de commande et de mémorisation 100 et le central téléphonique en ce qui concerne les signalisations relatives aux différentes voies de communication, signalisations à émettre IE, signalisations reçues IR. Le dispositif d'interface 105 met aussi en relation le central téléphonique avec un réseau de connexion temporel d'émission 106 pour ce qui concerne les données à émettre DE et avec un réseau de connexion temporel de réception 107 pour ce qui concerne les données reçues DR. Le dispositif d'interface 105 est relié au central téléphonique au moyen de paires téléphoniques 108. Le dispositif de commande et de mémorisation 100 contrôle les fonctionnements du réseau de connexion temporel d'émission 106 au moyen de signaux de commande d'adressage SCAE et de synchronisation CBTE et du réseau de connexion temporel de réception 107 au moyen de signaux de commande d'adressage SCAR et de synchronisation CBTS.

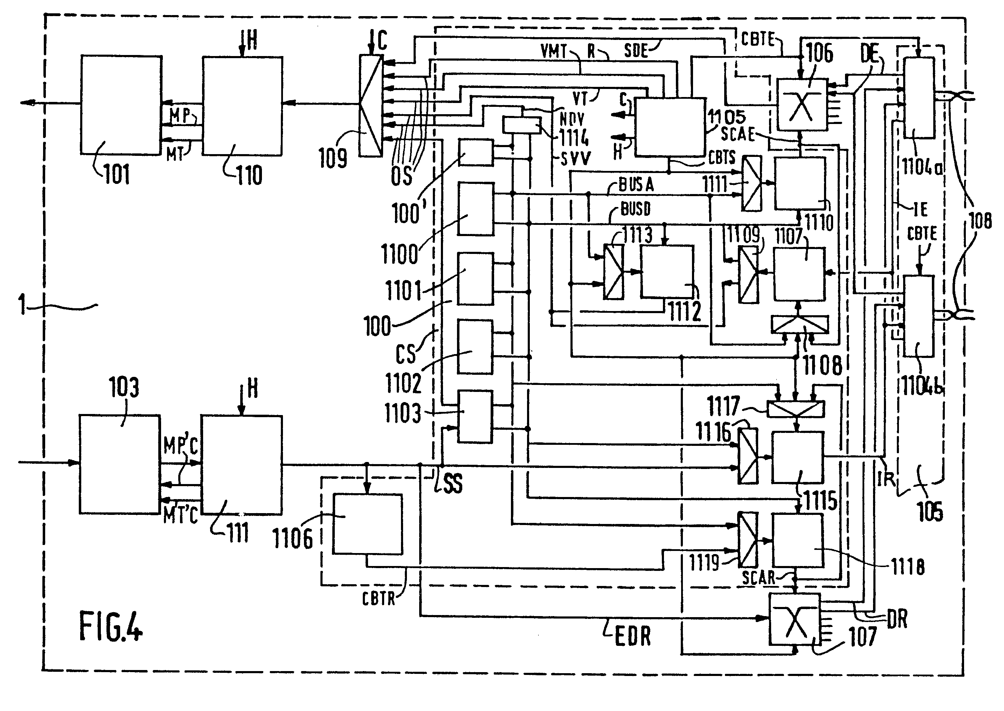

Le dispositif de commande et de mémorisation 100 comprend les moyens pour détecter les voies libres ou occupées, moyens qui seront décrits à l'aide de la figure 4.

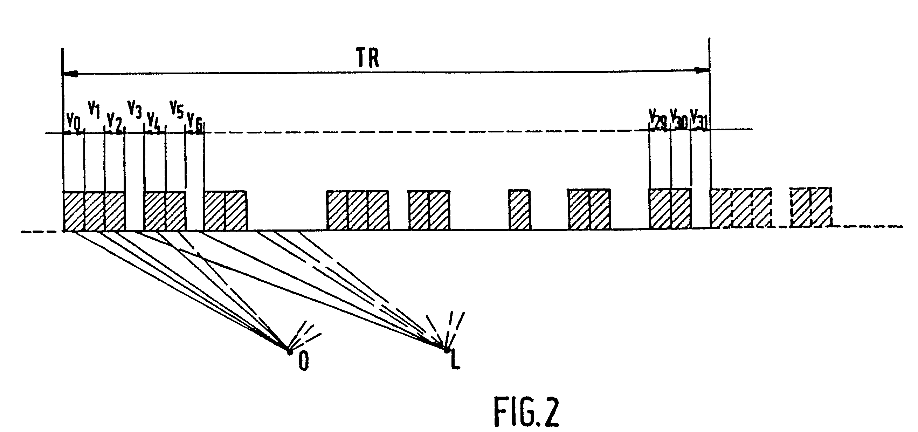

Dans cet exemple décrit, est choisi un multiplex de 32 voies représenté à la figure 2, à la sortie du réseau de connexion temporel d'émission 106 est alors une unique liaison à 32 voies SDE, multiplexée par un multiplexeur 109 qui reçoit d'autre part les signaux d'ordres et de signalisations des voies OS et un signal de commande C en provenance du dispositif de commande et de mémorisation 100. Ces signaux ainsi multiplexés sont transmis vers le circuit émetteur 101. Le récepteur 103 transmet les signaux reçus vers le réseau de connexion temporel de réception 107 (signaux EDR) et vers le connexion temporel de réception 107 (signaux EDR) et vers le dispositif de commande et de mémorisation (signaux SS).

La structure d'une station distante 2 est symétrique de celle de la station centrale 1. La station distante 2 est également sous le contrôle d'un dispositif de commande et de mémorisation 200 synchrone de celui de la station centrale et possède un circuit émetteur 201 et une antenne 202 et un circuit récepteur 203 et une antenne 204. Les circuits émetteur 201 et récepteur 203 ont les mêmes caractéristiques que les circuits émetteur 101 et récepteur 103 de la station centrale 1 et sont aussi alimentés au moyen d'une source de tension U (non représentée sur la figure). Un dispositif d'interface 205 assure la liaison entre le dispositif de commande et de mémorisation 200 et les équipements d'abonnés en ce qui concerne les signalisations relatives aux différentes voies de communication, signalisations à émettre IE', signalisations reçues IR'. Le dispositif d'interface met aussi en relation les équipements d'abonnés avec un réseau de connexion temporel d'émission 206 pour ce qui concerne les données à émettre DE' et avec un réseau de connexion temporel de réception 207 pour ce qui concerne les données reçues DR'. Le dispositif d'interface 205 est relié aux équipements d'abonnés au moyen de paires téléphoniques 208. Le dispositif de commande et de mémorisation 200 contrôle les fonctionnements du réseau de connexion temporel d'émission 206 au moyen de signaux de commande d'adressage SCAE' et du réseau de connexion temporel de réception 207 au moyen de signaux de commande d'adressage SCAR'. La sortie SDE' du réseau de connexion temporel d'émission 206 est reliée à un multiplexeur 209 qui reçoit aussi des signaux d'ordres et de signalisations de voies SS' et un signal de commande CBDT provenant du dispositif de commande et de mémorisation 200. Ces signaux une fois multiplexés sont transmis vers le circuit émetteur 201. Le récepteur 203 transmet les signaux reçus vers le réseau de connexion temporel de réception 207 (signaux EDR') et vers le dispositif de commande et de mémorisation 200 (signaux OS').

Conformément à l'invention, le système de transmission d'informations entre au moins deux stations pour transmettre des informations provenant de voies libres et occupées, chaque station disposant d'au moins un circuit émetteur et un circuit récepteur radio alimentés au moyen d'une source d'alimentation et de moyens pour détecter les voies libres ou occupées est remarquable en ce qu'il possède des moyens coopérant avec les moyens de détection pour mettre en oeuvre un procédé pour élaborer un multiplex temporel formé d'une trame élémentaire de durée T, dans lequel les informations provenant des voies occupées sont regroupées côte à côte dans ladite trame élémentaire et des moyens pour réduire la consommation du circuit émetteur et du circuit récepteur à partir de la détection de voies libres et pour alimenter normalement le circuit émetteur et le circuit récepteur à partir de la détection des voies occupées.

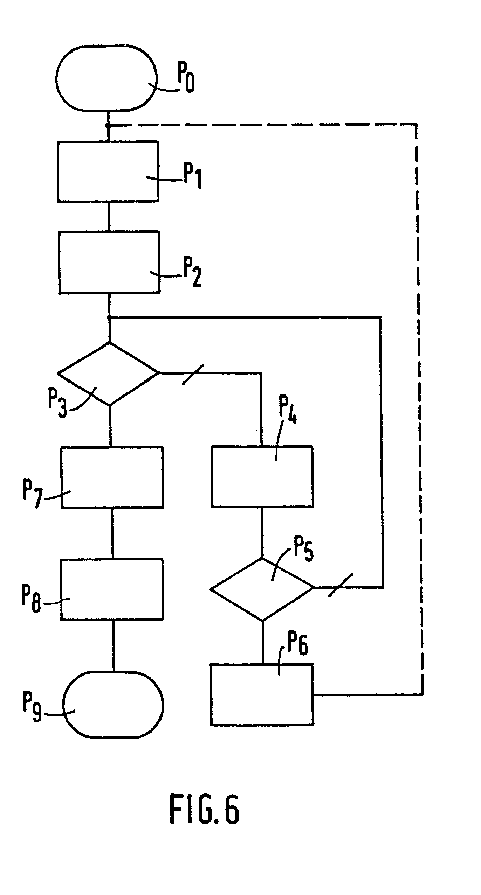

En effet le dispositif de commande et de mémorisation 100 coopère avec des moyens 100' pour mettre en oeuvre un procédé pour regrouper les voies occupées côte à côte dans la trame multiplex, ce procédé sera décrit à l'aide de la figure 6.

Selon une des caractéristiques de l'invention, le système de transmission d'informations, dans lequel les trames multiplex élémentaires transportent des informations relatives à des voies de service et des informations relatives à des voies de données est remarquable en ce qu'il comporte en outre des moyens pour regrouper les trames multiplex élémentaires n par n, les voies de service et les voies de données occupées étant regroupées n par n et côte à côte dans la nouvelle trame obtenue.

Ainsi, dans la station centrale 1, entre le multiplexeur 109 et le circuit émetteur 101 est avantageusement inséré un dispositif de transformation du multiplex et de commande de circuit émetteur 110, de même entre le circuit récepteur 103 et le réseau de connexion temporel de réception 107 d'une part et le dispositif de commande et de mémorisation 100 d'autre part est aussi inséré un dispositif de retransformation du multiplex et de commande de circuit récepteur 111. La sortie du multiplexeur 109 est reliée à l'entrée du dispositif 110 qui reçoit d'autre part une horloge H élaborée par le dispositif de commande et de mémorisation 100.

Selon une autre caractéristique de l'invention, le système de transmission d'informations dans lequel chaque station, centrale ou distante est équipée d'au moins un circuit émetteur et un circuit récepteur est remarquable en ce qu'il comporte de plus des moyens pour couper et alimenter soit partiellement soit totalement les circuits émetteur et récepteur. Une économie d'énergie supplémentaire est ainsi obtenue. La remise en marche et donc l'alimentation d'un circuit émetteur ou d'un circuit récepteur est assurée partiellement trois voies avant la fin de la trame pour les organes 101L et 103L les plus longs à rentrer en fonction alors que les organes 101C et 103C plus rapides à rentrer en fonction sont alimentés une voie ou moins avant la fin de la trame, l'alimentation totale des circuits émetteur ou récepteur étant alors assurée. De cette manière le circuit émetteur ou le circuit récepteur est de nouveau prêt à transmettre les informations dès le début de la nouvelle trame.

A partir des signaux d'entrée (multiplex, horloge H) le dispositif 110 d'une part émet un signal de mise en marche partielle MP et un signal de mise en marche totale MT, destinés à alimenter soir partiellement soit totalement le circuit émetteur 101, et d'autre part il transforme le multiplex élémentaire de durée T en un multiplex allongé de durée nT. Le signal MP est appliqué à un interrupteur 101A qui, quand le signal MP est actif connecte l'alimentation U aux organes 101L du circuit émetteur 101. Le signal MT est appliqué à un interrupteur 101B qui quand le signal MT est actif connecte l'alimentation U aux organes 101C. Quand les signaux MP et MT sont actifs le multiplex allongé présent à l'entrée du circuit émetteur est alors émis par voie radio vers la station distante 2.

De même, le dispositif de retransformation du multiplex et de commande de circuit récepteur 111 qui reçoit aussi l'horloge H, élabore le signal de mise en marche partielle MP'C appliqué à l'interrupteur 103A destiné à alimenter au moyen de l'alimentation U les organes 103L, le signal de mise en marche totale MT'C appliqué à l'interrupteur 103B destiné à alimenter au moyen de l'alimentation U les organes 103C et retransforme le multiplex allongé de durée nT en un multiplex élémentaire de durée T.

Dans la station distante 2, entre le multiplexeur 209 et le circuit émetteur 201 est aussi inséré un dispositif de transformation du multiplex et de commande du circuit émetteur 210 identique au dispositif 110 de la station centrale 1. De même entre le circuit récepteur 203 et le réseau de connexion temporel de réception 207 d'une part et le dispositif de commande et de mémorisation 200 d'autre part, est aussi inséré un dispositif de retransformation du multiplex et de commande de récepteur 211. La sortie du multiplexeur 209 est reliée à l'entrée du dispositif 210 qui reçoit d'autre part une horloge H' émise par le dispositif de commande et mémorisation 200.

Le dispositif 210 émet un signal de mise en marche partielle MPD et un signal de mise en marche totale MTD pour alimenter soit partiellement, soit totalement le circuit émetteur 201 et transforme le multiplex élémentaire en un multiplex allongé. Quand les signaux MPD et MTD sont actifs le multiplex allongé est alors émis par voie radio vers la station centrale 1 (les signaux MPD et MTD étant élaborés identiquement aux signaux MP et MT).

De même le dispositif de retransformation du multiplex et de commande de circuit récepteur 211 qui reçoit aussi l'horloge H' élabore le signal de mise en marche partielle MP', le signal de mise en marche totale MT' et retransforme le multiplex allongé en un multiplex élémentaire. Les signaux MP' et MT' étant élaborés en totale identité avec les signaux MP'C et MT'C.

La figure 2 représente un multiplex comportant des voies occupées et des voies libres. Dans ce multiplex supportant la description, une trame TR est constituée de 32 voies V0, V1, V2, V3, V4, V5, V6, ..., V29, V30, V31. Certaines voies sont occupées et sont référencées 0 telles que V0, V1, V2, V4, ..., d'autres voies sont libres, elles sont référencées L, telles que V3, V6, ... Une telle configuration de voies dans la trame pourrait exister avant l'application des moyens de l'invention.

Pour une meilleure appréhension de l'invention, il est avantageux de décrire succinctement, à l'aide de l'exemple du multiplex précédemment cité, la structure d'une trame, cette structure de trame n'étant pas limitative.

La trame élémentaire, donc avant regroupement de n trames, comprend trois voies de service et dispose ainsi pour une trame à 32 voies de 29 voies de données. Dans les voies de service sont transportés le rythme, les mots de verrouillage de trame et de multitrame et le canal sémaphore. Les voies de données transportent les données relatives aux communications. Lorsqu'une voie de données n'est pas occupée, elle transporte du rythme.

Le système de transmission d'informations selon l'invention, dont les voies de service transportent le signal de rythme, les mots de verrouillage de trame et de multitrame et le canal sémaphore est remarquable en ce que le signal de rythme est transmis en tout début de trame multiplex.

Le système de transmission est aussi caractérisé en ce que l'information d'état des voies (libres ou occupées) et le numéro de la dernière voie utilisée sont transmis dans le multiplex.

Les voies de service sont systématiquement regroupées en début de trame, la structure de la trame ainsi définie est la suivante:

— la voie 0 qui transporte selon l'invention le rythme de manière systématique.

Le signal de rythme est émis par une horloge à la fréquence bit divisée par deux, ce qui permet lorsqu'il y a très peu de voies utilisées de resynchroniser correctement la station distante avant l'arrivée des premières informations significatives;

— la voie 1 qui comprend le mot de verrouillage de trame et le numéro de la dernière voie utilisée;

— la voie 2 qui comprend le mot de verrouillage multitrame, l'information d'état des voies sous forme des signalisations voie par voie et le canal sémaphore.

La trame contient dans l'exemple 32 voies numérotées de V0 à V31, chaque voie dispose d'un octet donc de 8 bits.

La multitrame comprend 32 trames numérotées de 0 à 31.

Dans la voie 1 le mot de verrouillage de trame est présent une fois sur deux dans les trames de rang pair par exemple. De même le numéro de la dernière voie utilisée est présent une fois sur deux dans les trames de rang impair.

· La voie 2 est partagée entre différents canaux:

— le canal sémaphore durant les trames de rang impair

— le mot de verrouillage de multitrame durant la trame de rang 0

— les signalisations voie par voie durant les trames de rang pair allant de 2 à 30. Dans un octet on transmet la signalisation de 2 voies:

a0 b0 c0 d0 a1 b1 c1 d1

Il y a 4 bits de signalisation par voie.

Les bits a0, b0, c0, d0 représentent la signalisation de la voie ayant le même numéro que la trame et les bits a1, b1, c1, d1, représentent la signalisation de la voie ayant le même numéro que la trame augmenté d'une unité.

Les bits a, b, et c représentent la signalisation du joncteur ou de l'équipement auquel a été affectée la voie, le bit d représentant l'état d'occupation de la voie.

Les voies 3 à 31 sont affectées aus abonnés.

La configuration du multiplex est donc la suivante:

| N° de trame \ N° de voie | V0 | V1 | V2 | V3 à V31 |
|---|---|---|---|---|
| 0 | rythme | Verrouillage trame (VT) | Verrouillage Multitrame (VMT) | voies de parole |
| 1 | rythme | numéro dernière voie | Canal sémaphore (CS) | » |
| 2 | rythme | VT | signalisations voie 2 et 3 | » |
| 3 | rythme | numéro dernière voie | CS | » |
| 4 | rythme | VT | signalisations voie 4 et 5 | » |
| 5 | rythme | numéro dernière voie | CS | » |
| 27 | rythme | numéro dernière voie | CS | » |
| 28 | rythme | VT | signalisations voie 28 et 29 | » |
| 29 | rythme | numéro dernière voie | CS | » |
| 30 | rythme | VT | signalisations voie 30 et 31 | » |
| 31 | rythme | numéro dernière voie | CS | » |
| 0 | rythme | VT | VMT | » |

L'octet de verrouillage de trame est choisi de manière à ce qu'il ne puisse pas y avoir d'imitation par l'octet contenant le numéro de la dernière voie utilisée. Ceci ne présente aucune difficulté puisque seulement 5 bits sont nécessaires pour transmettre ce numéro, ce qui donne l'exemple de configuration suivante:

octet de verrouillage de trame     1 0 0 1 1 0 1 1

octet de numéro de la dernière voie 1 1 1   NDV

NDV: numéro de la dernière voie utilisée.

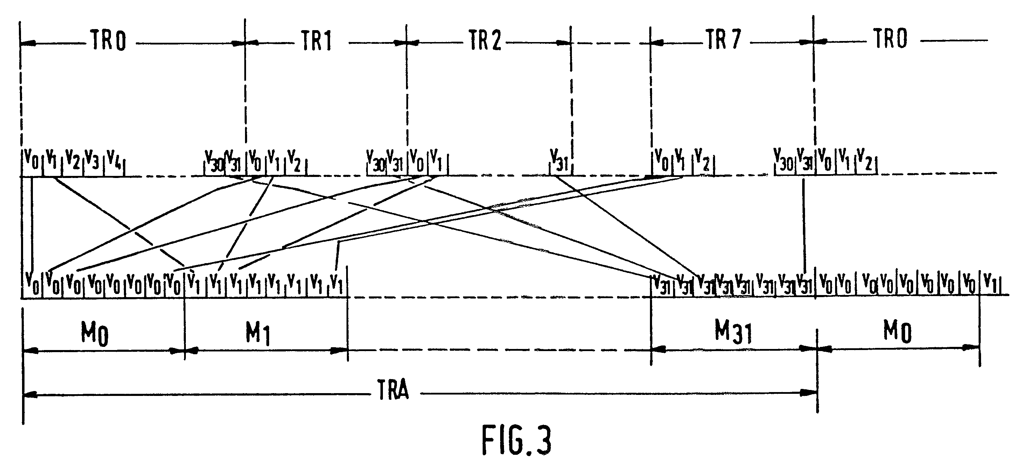

La figure 3 représente la transformation d'une trame élémentaire en une trame allongée. Dans l'exemple décrit, le nombre de trames regroupées selon l'invention a été choisi égal à 8.

Les voies référencées de chaque trame élémentaire sont au nombre de 32: V0, V1, V2, V3, V4, ..., V30, V31. Les trames élémentaires sont regroupées par n = 8: TR0, TR1, TR2, ..., TR7 pour constituer une trame allongée TRA. Lorsque les n = 8 trames élémentaires sont regroupées formant une trame allongée, les voies V du multiplex élémentaire se trouvent rassemblées côte à côte par groupe de 8 voies: 8V0, 8V1, ..., 8V31. Les voies du multiplex allongé sont référencées M, ainsi la voie M0 contient 8 voies élémentaires V0, la voie M1 contient 8 voies élémentaires V1, ... et la voie M31 contient 8 voies élémentaires V31.

Sur la figure 4 est proposé un schéma synoptique de la station centrale 1. Le dispositif de commande et de mémorisation 100 est contrôlé par une unité de commande 1100 élaborée autour d'un microprocesseur. L'unité de commande 1100 est munie d'une ligne d'adresses BUSA et d'une ligne de données BUSD et est ainsi associée à des mémoires vives 1101, à des mémoires mortes 1102 et à un boîtier d'interface 1103 assurant la gestion du canal sémaphore facilitant le dialogue entre station centrale et station distante. Le dispositif d'interface 105 est constitué de joncteurs 1104e, 1104b, ..., réalisant la liaison entre la station centrale 1 et l'autocommutateur du central téléphonique (non représenté), au moyen de paires téléphoniques 108. Il y a autant de joncteurs que de lignes d'abonné à raccorder. Le dispositif de commande et de mémorisation 100 possède une base de temps d'émission 1105 qui fournit des signaux de commande CBTE aux différents joncteurs 1104a, 1104b, ..., afin d'effectuer le codage et le décodage des signaux BF de parole, de récupérer les signalisations transmises (état des boucles) et de délivrer les ordres (sonnerie, télétaxe, inversion de batterie) qui sont détectés sur les lignes de raccordement au central téléphonique. Le signal de commande CBTE commande aussi le réseau de connexion temporel d'émission 106. Le dispositif 100 dispose aussi d'une base de temps de réception 1106.

La concentration des voies de parole sur les voies de la liaison multiplex est effectuée après détection des informations de décrochage d'un abonné d'une station distante transmises par le canal sémaphore ou des informations concernant un nouvel appel généré par l'autocommutateur du central téléphonique (non représenté). La détection du nouvel appel est faite par le dispositif 100 au travers d'une mémoire d'ordres 1107 précédée d'un multiplexeur 1108, dans laquelle sont écrits systématiquement tous les ordres issus des joncteurs d'abonné, signal IE. L'unité de commande 1100 vient lire périodiquement cette mémoire d'ordres 1107 au travers d'un multiplexeur 1109 et détecte ainsi les changements d'état.

L'affectation d'une voie à un joncteur est réalisée au moyen du réseau de connexion temporel 106 et d'une mémoire de commande 1110 précédée du multiplexeur 1111. La mémoire de commande 1110 du réseau de connexion 106 et le multiplexeur 1111 sont situés dans le dispositif 100. Le réseau de connexion 106 est essentiellement constitué par des mémoires dans lesquelles on vient écrire systématiquement les voies BF codées issues des joncteurs, signaux DE. A la sortie du réseau de connexion 106 il n'y a plus qu'une seule liaison à 32 voies, signal SDE, si le multiplex est choisi à 32 voies. La concentration est effectuée en venant lire au temps réservé (signal CBTE émis par la base de temps 1105) à la voie de sortie le contenu du mot correspondant à la voie d'entrée que l'on veut y aiguiller. Les adresses de lecture sont délivrées par la mémoire de commande 1110, signaux SCAE. Pour affecter une voie l'unité de commande 1100 écrit donc dans la mémoire 1110 à l'adresse correspondant à la voie de sortie, le numéro de la voie d'entrée qu'elle veut y connecter. Les adresses de lecture SCAE délivrées par la mémoire 1110 servent également à venir lire dans la mémoire d'ordres 1107 les signalisations aux voies qui ont été concentrées (signalisation voie par voie).

Corrélativement, l'unité de commande 1100 écrit dans une mémoire d'occupation de voies 1112 de 32 × 1 bits, l'état d'occupation des voies, un multiplexeur 1113 est associé à la mémoire 1112. La lecture de cette mémoire se fait en même temps que celle de la mémoire d'ordres 1107: de cette manière la signalisation voie par voie SVV transmet l'état de la voie, occupé ou libre, en même temps que la signalisation du joncteur qui y a été raccordé. La lecture et l'écriture dans les mémoires d'ordres 1107, de commande 1110 et d'occupation des voies 1112 se font en synchronisme avec la base de temps d'émission 1105, signal CBTS.

Le multiplexeur 109 permet de rassembler sur la liaison multiplex, les voies de paroles, signaux de sortie SDE du réseau de connexion 106 et les signaux d'ordre et de signalisations des voies OS qui sont les suivants:

— le signalisation voie par voie SVV transmise par les mémoires d'ordres 1107 et d'occupation des voies 1112, qui en coopération avec l'unité de commande 1100 constituent les moyens pour détecter les voies libres ou occupées;

— le canal sémaphore transmis par le boîtier d'interface 1103;

— le numéro de la dernière voie utilisée NDV, délivré par l'unité de commande 1100 via le circuit 1114 où est inscrit le numéro de la dernière voie utilisée;

— les mots de verrouillage de trame VT, de multitrame MVT, le signal de rythme R, tous émis par la base de temps d'émission 1105 (les mots de verrouillage de trame et de multitrame permettant de reconnaître les différentes voies).

Le multiplexeur 109 est commandé par le signal de commande C émis par la base de temps d'émission 1105.

Le signal à la sortie du multiplexeur 109 est transmis vers le circuit émetteur 101.

Le circuit récepteur 103 transmet les informations reçues vers le réseau de connexion temporel de réception 107, signal EDR, et vers le dispositif 100, signaux SS. Les signaux SS comprennent d'une part les signalisations des voies qui sont transmises vers une mémoire de signalisation 1115 située dans le dispositif 100 et d'autre part les informations du canal sémaphore qui sont transmises vers le boîtier d'interface 1103. Les informations reçues permettent aussi de reconstituer la base de temps réception 1106 à partir des mots de verrouillage de trame contenus dans lesdites informations. Cette base de temps 1106 permet d'extraire les différentes voies de la trame et de la multitrame.

Dans le dispositif 100, la mémoire de signalisation 1115 est précédée des multiplexeurs 1116 et 1117, alors qu'une mémoire de commande 1118, précédée d'un multiplexeur 1119 adresse le réseau de connexion temporel de réception 107 au moyen des signaux de commande d'adressage SCAR.

Le réseau de connexion temporel de réception 107 et la mémoire de signalisation 1115 ont un fonctionnement identique à celui du réseau de connexion temporel d'émission 106 et de la mémoire d'ordres 1107 à l'émission. A l'entrée du réseau de connexion 107 est une liaison multiplex unique, signal EDR, alors qu'à sa sortie sont transmises les informations reçues sur une pluralité de liaisons multiplex, signaux DR. L'unité de commande 1100 écrit dans la mémoire de commande 1118 à l'adresse correspondant à une voie d'entrée du réseau de connexion 107 le numéro de la voie de sortie qu'elle veut y connecter, à l'instant défini par le signal de commande CBTR émis par la base de temps de réception 1106. De même les signalisations voie par voie contenues dans la trame sont systématiquement écrites dans la mémoire de signaux 1115 aux adresses SCAR délivrées par la mémoire de commande 1118. La lecture de la mémoire de commande 1118 et donc l'écriture systématique dans le réseau de connexion 107 et dans la mémoire de signalisation 1115 se font en synchronisme avec la base de temps réception 1106, signal CBTR, alors que la lecture systématique de la mémoire de signalisation 1115 et du réseau de connexion 107 se font en synchronisme avec la base de temps d'émission 1105, signal CBTS.

Dans la mémoire de signalisation 1115, l'unité de commande 1100 écrit le code repos aux adresses correspondant aux joncteurs qui ne sont pas connectés aux voies d'entrée. La connexion est identique dans les sens émission et réception, la même voie est affectée au même joncteur, signal IR.

Selon un aspect de l'invention le dispositif de commande et de mémorisation 100 coopère avec des moyens 100' pour mettre en oeuvre un procédé pour regrouper les voies occupées côte à côte dans la trame multiplex. Dans une réalisation préférée de l'invention les moyens 100' sont des mémoires mortes dans lesquelles sont écrits les différents états relatifs au procédé (décrit à l'aide de la figure 6) qui est mis en oeuvre pour regrouper les voies occupées côte à côte. Les moyens 100' coopèrent avec les moyens de détection des voies libres et occupées constitués par l'unité de commande 1100, les mémoires d'ordres 1107 et d'occupation des voies 1112 pour mettre en oeuvre ledit procédé. En particulier le microprocesseur de l'unité de commande 1100 est en relation avec les moyens 100' par l'intermédiaire de la ligne d'adresses BUSA et de la ligne de données BUSD.

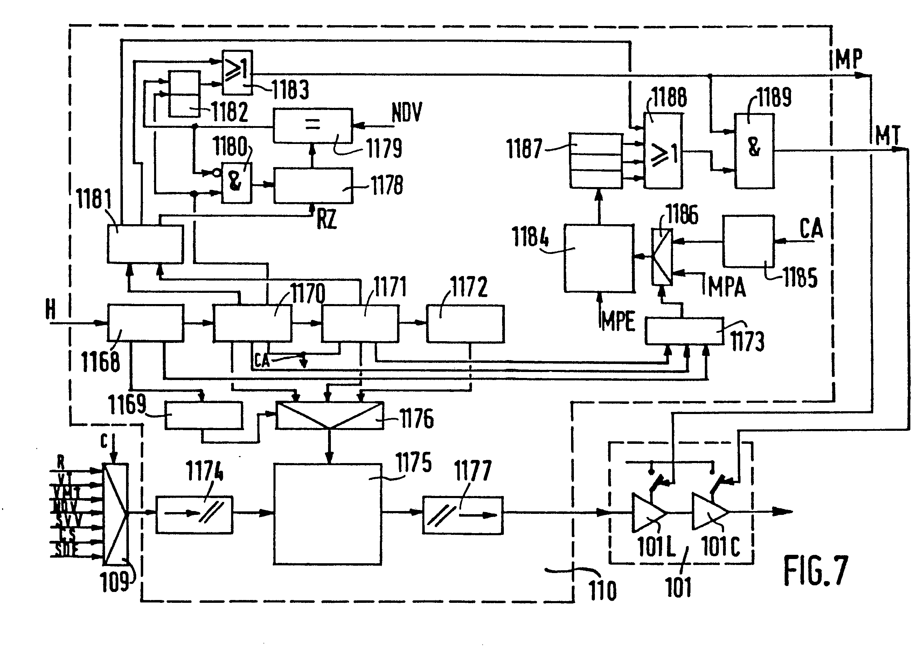

Selon un autre aspect de l'invention, dans la station centrale 1, entre le multiplexeur 109 et le circuit émetteur 101 est inséré le dispositif de transformation du multiplex et de commande du circuit émetteur 110, de même entre le circuit récepteur 103 et le réseau de connexion temporel de réception 107 d'une part et le dispositif de commande et de mémorisation 100 d'autre part est inséré le dispositif de retransformation du multiplex et de commande du circuit récepteur 111. Une horloge H, émise par la base de temps d'émission 1105, est utilisée par les dispositifs 110 et 111. Le dispositif 110 émet les signaux MT et MP vers le circuit émetteur 101, alors que le dispositif 111 émet les signaux MT'C et MP'C vers le circuit récepteur 103. Les dispositifs 110 et 111 seront respectivement décrits à l'aide des figures 7, 8 et 9, 10.

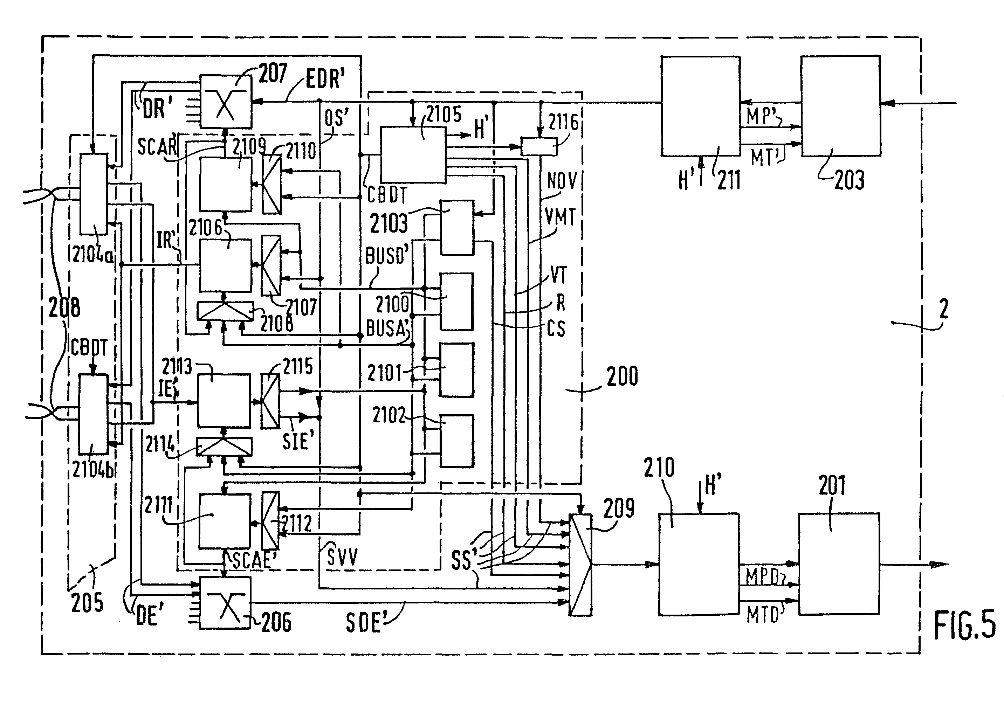

Sur la figure 5 est proposé un schéma synoptique de la station distante 2, dont la structure est symétrique de celle de la station centrale 1. Le dispositif de commande et de mémorisation 200 est contrôlé par une unité de commande 2100 élaborée autour d'un microprocesseur. L'unité de commande 2100 est munie d'une ligne d'adresses BUSA' et d'une ligne de données BUSD' et est ainsi associée à des mémoires vives 2101, à des mémoires mortes 2102 et à un boîtier d'interface 2103 assurant la gestion du canal sémaphore. Le dispositif d'interface 205 assure la liaison entre la station distante et les équipements d'abonné au moyen de paires téléphoniques 208, il est constitué de circuits de jonction 2104a, 2104b, ... Il y a autant de circuits de jonction que de lignes d'abonné. Le dispositif de commande et de mémorisation 2100 possède une base de temps 2105 unique, reconstituée à partir du multiplex reçu, qui fournit des signaux de commande CBDT aux différents circuits de jonction 2104a, 2104b, ... La station distante est de même pourvue en réception d'une mémoire d'ordres 2106, précédée des multiplexeurs 2107 et 2108. Dans la mémoire 2106, aux adresses fournies par l'unité de commande 2100, sont écrits systématiquement tous les ordres (signal de sortie IR') concernant les circuits de jonction d'abonné, à partir de la trame multiplex reçue (signaux OS') et des données fournies par l'unité de commande 2100, en synchronisme avec le signal CBDT émis par la base de temps 2105. La signalisation d'occupation des voies est aussi réinjectée vers l'émission via le multiplexeur 209. L'affectation d'une voie à un circuit de jonction est réalisée au moyen de réseau de connexion temporel de réception 207 et d'une mémoire de commande 2109 précédée du multiplexeur 2110. La mémoire 2109 et le multiplexeur 2110 sont situés dans le dispositif 200. A l'entrée du réseau de connexion temporel de réception 207 est transmis le multiplex reçu EDR', alors qu'à sa sortie une pluralité de liaisons multiplex DR' sont transmises vers les différents circuits de jonction. Les adresses d'écriture SCAR' sont fournies par la mémoire de commande 2109. Pour affecter une voie l'unité de commande 2100 écrit dans la mémoire 2109 à l'adresse correspondant à la voie de sortie le numéro de la voie d'entrée qu'elle veut y connecter, en synchronisme avec le signal CBDT émis par la base de temps 2105. Les adresses d'écriture SCAR' délivrées par la mémoire 2109 servent également à écrire dans la mémoire d'ordres 2106 les signalisations des voies.

Les données à émettre DE', issues des différents circuits de jonction, sont transmises aux entrées du réseau de connexion temporel d'émission 206. A la sortie du réseau de connexion 206, le signal SDE' est émis sur une liaison multiplex unique vers le multiplexeur 209. La mémoire de commande 2111, précédée du multiplexeur 2112 est écrite par l'unité de commande 2100 aux adresses définies par l'unité de commande 2100 en synchronisme avec le signal CBDT émis par la base de temps 2105. La mémoire 2111 adresse le réseau de connexion 206 au moyen des signaux de commande d'adressage SCAE'. De même les signalisations IE' issues des circuits de jonction sont transmises vers la mémoire de signalisation 2113 associée aux multiplexeurs 2114 et 2115. Les signalisations voie par voie sont écrites dans la mémoire de signalisations 2113 en synchronisme avec le signal CBDT de la base de temps 2105. La lecture de la mémoire 2113 est réalisée par l'unité de commande 2100 aux adresses définies par l'unité de commande 2100 pour détecter les décrochages. La lecture de la mémoire 2113 est également réalisée à partir des adresses SCAE' délivrées par la mémoire de commande 2111 et les signalisations SIE' sont alors transmises vers le multiplexeur 209. Le multiplexeur 209 est commandé par le signal CBDT et rassemble sur la liaison multiplex les voies de paroles, signaux SDE' et les différentes signalisations SS' qui se décomposent ainsi:

— La signalisation voie par voie SVV résultant des signaux SIE' et de la signalisation d'occupation des voies.

— Le canal sémaphore CS transmis par le boîtier d'interface 2103 qui reçoit les informations (signaux OS') de la trame multiplex émise par la station centrale.

— Les mots de verrouillage de trame VT et de multitrame VMT et le signal de rythme R issus de la base de temps reconstituée 2105.

— Le numéro de la dernière voie utilisée NDV, issu du circuit 2116. Le numéro de la dernière voie utilisée est extrait de la trame multiplex émise par la station centrale, il est écrit dans le circuit 2116 et retransmis vers le multiplexeur 209 en synchronisme avec la base de temps 2105.

Selon un autre aspect de l'invention, dans la station distante 2, entre le multiplexeur 209 et le circuit émetteur 201 est inséré le dispositif de transformation du multiplex et de commande de circuit émetteur 210, de même entre le circuit récepteur 203 et le réseau de connexion temporel de réception 207 d'une part et le dispositif de commande et de mémorisation 200 d'autre part est inséré le dispositif de retransformation du multiplex et de commande de circuit récepteur 211. Une horloge H' émise par la base de temps reconstituée 2105 est utilisée par les dispositifs 210 et 211. Le dispositif 210 et le dispositif 211 sont respectivement identiques aux dispositifs 110 et 111 de la station centrale 1. Le dispositif 210 émet les signaux MTD et MPD vers le circuit émetteur 201, alors que le dispositif 211 émet les signaux MT' et MP' vers le circuit récepteur 203.

La description de la station distante 2 achevée, il y a lieu de remarquer qu'au delà de la symétrie existant entre station centrale et station distante, il apparaît quelques différences. En effet la station distante est synchrone de la station centrale, ainsi la base de temps 2105 récupérée à la réception est unique et donc également utilisée à l'émission. La commande des réseaux de connexion temporels 206 et 207 est aussi ordonnée par la station centrale. Le numéro de la dernière voie utilisée écrit dans le circuit 2116 qui est retransmis dans la trame émise est extrait de la trame reçue. Enfin l'état d'occupation des voies, retransmis dans la signalisation voie par voie est le même que celui reçu dans la trame incidente, c'est donc une recopie de la signalisation de voie inscrite dans la mémoire d'ordres 2106..

Sur la figure 6 est proposé un schéma d'application d'un procédé mis en oeuvre pour regrouper selon l'invention, dans une configuration donnée les voies occupées dans le multiplex.

L'affectation des voies sur le multiplex est effectuée par la station centrale sur détection d'un appel entrant, venant du central téléphonique, ou lors du décrochage d'un abonné raccordé à une station distante.

Dans l'exemple d'application qui suit et pour une meilleure compréhension, les voies V0 à Vi du multiplex sont des voies de service (rythme, synchronisations trame et multitrame, signalisations) et sont toujours présentes dans les trames. Les voies Vi + 1 à Vn du multiplex sont des voies de données qui évoluent entre les états «libre» et «occupé». Une voie de donnée est dite occupée lorsqu'une communication a été associée à cette voie. Toutes les voies de données sont à l'état «libre» lors de la mise en service du réseau.

Les voies de service sont toujours affectées en début de trame et pour optimiser l'utilisation de la trame, la station centrale affecte, lors de l'établissement des communications, les voies de données au rang le plus faible à partir de Vi + 1 jusqu'à Vn.

Deux cas peuvent se produire relativement à la prise en compte des appels, l'appel provient soit du central téléphonique, soit d'un abonné raccordé à une station distante (à l'instant où l'abonné décroche son piste téléphonique). Dans les deux cas le procédé mis en oeuvre pour l'affectation d'une voie est le même et le schéma de la figure 6 apporte une solution à l'ensemble de ces deux cas. Le procédé qui va être décrit est mis en oeuvre dans le dispositif 100 par l'intermédiaire des moyens de détection des voies libres ou occupées et des moyens 100' contenant les différents états dudit procédé.

Dans le premier cas décrit l'appel est émis par le central téléphonique. A l'état initial P0, le joncteur associé est au repos. Puis survient l'appel entrant venant du central téléphonique c'est l'état P1, c'est alors qu'il est nécessaire d'appliquer une procédure d'affectation des voies pour, selon l'invention, regrouper les voies de données côte à côte et par exemple en début de trame, les voies de services étant systématiquement imposées aux trois premières voies. Dans la procédure d'affectation d'une voie de la trame, r, i et n représentent le rang d'une voie dans la trame, i + 1 représente le premier rang d'affectation possible pour une voie de données, n représente le dernier rang d'affectation possible, r est le rang qui est imposé au moment de l'affectation. Le premier rang possible après i est le rang r = i + 1, c'est l'état P2. Une question se pose aussitôt après à l'état P3, la voie Vr de rang r est-elle libre? Si la réponse est non, il est ajouté une unité au rang r et le rang r + 1 va être prospecté, c'est l'état P4. Une autre question se pose alors à l'état P5. Le rang prospecté est-il supérieur à n (dernier rang possible)? Si la réponse est oui, l'affectation est refusée, c'est l'état P6, les voies sont toutes occupées, il faut rappeler. Si par contre la réponse est non, c'est à dire que le rang prospecté est de rang inférieur relativement au rang n, on retourne à l'état P3: la voie de nouveau rang prospecté est-elle libre? Si elle est occupée, la procédure repasse par les états P4, P5 tant qu'il n'est pas trouvé de voie libre ou tant que l'affectation n'est pas refusée (état P6). Quand la voie de rang prospecté est libre, l'état P7 est établi, la voie de rang prospecté est déclarée occupée (transmission d'un bit d'occupation de la voie) et l'affectation acceptée, le joncteur est en communication. Au terme de la communication, la voie utilisée est libérée *c'est l'état P8, la voie est* déclarée libre (transmission du bit d'occupation de la voie). Le dernier état, l'état P9 est équivalent à l'état P0, c'est à dire que le joncteur est de nouveau au repos.

Dans le second cas le procédé est absolument identique. A l'état initial P0 l'équipement d'abonné est au repos et l'état P1 est provoqué au décrochage de l'appareil téléphonique par l'abonné. Les états P2, P3, P4, P5, P6, P7 et P8 sont les états décrits dans le premier cas. L'état P9 est aussi équivalent à l'état initial P0, c'est à dire que l'équipement d'abonné est de nouveau au repos.

Dans ce mode de fonctionnement, il existe une probabilité non nulle où peu de voies sont utilisées mais où la dernière voie utilisée et à la fin de la trame. L'unité de commande de la station centrale a connaissance de l'occupation des voies et de leur affectation aux abonnés. Si cette configuration dure trop longtemps, l'unité de commande procède à une réaffectation des voies de manière à rassembler en début de trame les voies occupées.

Ainsi, suite à un fort trafic ou lors de communications de longue durée, certaines voies de communication de rang élevé peuvent être occupées alors que de nombreuses voies de rang faible sont redevenues libres. Une réorganisation de la trame est décidée par la station centrale afin de regrouper les communications sur les voies de données de rang faible.

La réorganisation consiste à prendre les communications associées à des voies de rang élevé et à les replacer sur des voies libres de rang faible, ceci dépend d'un ensemble de paramètres liés à la voie du réseau concernée, ces paramètres sont les suivants:

N: nombre de communications en cours.

Vh: voie occupée de rang le plus élevé.

h: rang de la voie $V_h$.

D: durée moyenne d'une communication dans l'heure écoulée (exprimée en centièmes d'heure).

C: nombre de communications établies durant l'heure écoulée.

L'organisation de la trame est analysée sur échéance d'une temporisation de durée D. La réorganisation n'est décidée que lorsque la condition ci-dessous est vraie:

$$\frac{C \times D}{(h - i) - n} \leqslant x \quad (\text{x étant choisi par l'opérateur})$$

Cette condition exprime le rapport entre le nombre de communications susceptibles d'être établies durant la période D à venir et le nombre de voies de communication à l'état libre comprises entre Vi et Vh. Tant que ce rapport demeure supérieur ou égal à 1, il n'est pas oportun d'imposer une réorganisation du multiplex, par contre dès que ce rapport devient très inférieur à 1, une réorganisation s'impose.

Si la condition de réorganisation est déclarée vraie, le logiciel de la station centrale transfère les communications associées aux voies de rang le plus élevé vers les voies libres de rang faible en commençant par la communication associée à la voie occupée de rang le plus élevé Vh.

Sur la figure 7 est proposé le schéma synoptique du dispositif de transformation du multiplex et de commande du circuit émetteur 110 identique au dispositif 210.

Le système de transmission est remarquable en ce qu'il possède des moyens pour réduire la consommation du circuit émetteur et du circuit récepteur à partir de la détection des voies libres et pour alimenter normalement le circuit émetteur et le circuit récepteur à partir de la détection des voies occupées. Lors de la description de la station centrale à l'aide de la figure 4, les moyens pour détecter les voies libres ou occupées ont été détaillés, ils sont constitués par l'unité de commande 1100 et les mémoires d'ordres 1107 et d'occupation des voies 1112.

Cependant comme il a été mentionné dans le préambule le temps de réponse à la mise en marche des circuits émetteur et récepteur n'est pas négligeable relativement à la durée d'une trame multiplex utilisée couramment dant ce type d'application (par exemple: multiplex de 32 voies à 125 µs de récurrence). Aussi pour réduire l'influence du temps de réponse des circuits émetteur et récepteur et donc augmenter avantageusement l'économie en énergie, l'organisation de la trame multiplex est réalisée de manière différente.

Pour cela, le système de transmission comporte des moyens pour regrouper les trames multiplex élémentaires n par n, les voies de service et les voies de données occupées étant regroupées n par n et côte à côte dans la nouvelle trame ainsi obtenue. La trame multiplex élémentaire (à 32 voies par exemple) est transformée en une trame n fois plus longue et les n voies de même rang sont regroupées côte à côte. On dispose d'une suite de compteurs composée d'un compteur de bits 1168, d'un compteur de voies 1170, d'un compteur de trames 1171, d'une bascule de choix de mémoire 1172 permettant d'adresser une partie d'une mémoire. Ces quatre compteurs sont synchrones de l'horloge H émise par la base de temps 1105 (figure 4) et en phase relativement à la trame, (ils pourraient faire partie de la base de temps 1105). Le multiplexeur 109 commandé par le signal C issu de la base de temps 1105 (figure 4) permet d'insérer dans la trame élémentaire (avant regroupement des trames n par n) différents signaux tels que le signal de rythme R, les mots de verrouillage de trame VT et de multitrame VMT, le numéro de la dernière voie utilisée NDV, les signalisations d'état des voies SVV, le canal sémaphore CS et les signaux relatifs aux voies de données SDE. La sortie du multiplexeur 109 est connectée à l'entrée d'un convertisseur série-parallèle 1174 dont la sortie est reliée à un circuit de mémoire 1175. La transformation du multiplex élémentaire en un multiplex allongé comprenant n trames est effectuée au moyen de la mémoire 1175 pouvant contenir deux fois n trames. Dans une moitié de la mémoire sont écrites les n trames du multiplex élémentaire, dans leur ordre d'arrivée et pendant ce temps-là l'autre moitié de la mémoire est lue dans un ordre différent pour constituer le multiplex allongé. La mémoire 1175 est sous le contrôle des différents signaux d'adresse issue des compteurs 1170, 1171 et de la bascule 1172 qui permet de faire le choix de la moitié de mémoire concernée, tous ses signaux sont multiplexés par le multiplexeur 1176. Le temps d'accès à la mémoire 1175 au rythme des voies V est partagé en deux: un temps pour l'écriture et un temps pour la lecture. La commande du multiplexeur 1176 est obtenue à partir d'un circuit de décodage 1169 commandé à partir des signaux du compteur de bits 1168.

Afin d'en préciser le processus, un exemple d'application est proposé dans lequel la valeur choisie n = 8 n'est pas limitative.

Le compteur de voies 1170 délivre les fils d'adresse A0, A1, A2, A3, A4 permettant de repérer les voies du multiplex élémentaire initial, tandis que le compteur de trames 1171 délivre les fils d'adresse A5, A6, A7 permettant de repérer les n = 8 trames qui vont constituer le multiplex allongé. La bascule 1172 «choix de mémoire» délivre le fil d'adresse A8 indiquant la partie de la mémoire concernée.

L'écriture dans la mémoire se fait dans la moitié indiquée par l'état de A8, aux adresses fixées par les commandes: A0, A1, A2, A3, A4, A5, A6, A7.

La lecture de la mémoire se fait dans la moitié indiquée par l'état de $\overline{A8}$, aux adresses fixées par les commandes A3, A4, A5, A6, A7, A0, A1, A2.

L'écriture dans la mémoire se fait ainsi dans l'ordre pour un multiplex élémentaire de 32 voies en ayant choisi de l'allonger 8 fois:

0, 1, 2, 3, 4, 5, 6, 7, 8, 9, ..., 253, 254, 255,

tandis que la lecture se fait dans l'ordre:

0, 32, 64, 96, 128, 160, 192, 224, 1, 33, 65, ..., 225, ..., 255.

La sortie de la mémoire 1175 est alors connectée à un convertisseur parallèle série 1177 dont la sortie est reliée au circuit émetteur 101.

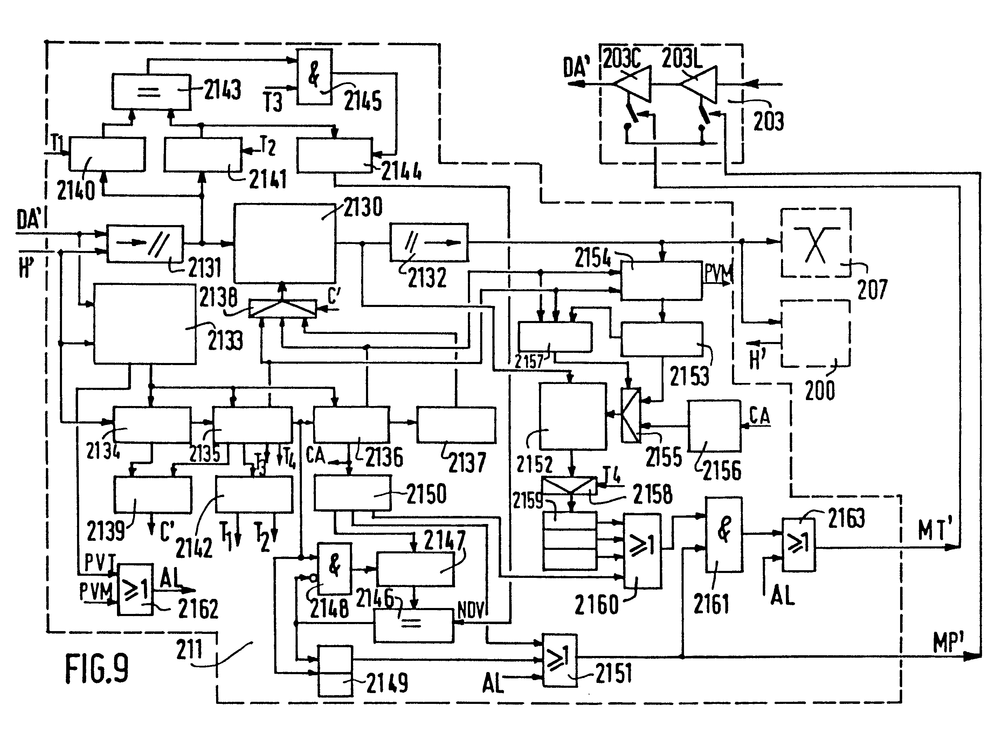

A l'émission la trame élémentaire classique est ainsi allongée et c'est alors que les commandes de l'émetteur sont élaborées. A la réception, il sera montré à l'aide de la figure 9 comment à partir de la trame allongée reçue, les commandes du récepteur sont élaborées et comment cette trame allongée est retransformée en une trame élémentaire classique.

Selon une des caractéristiques du système de transmission, la transmission des informations d'état des voies (libre ou occupé) et le numéro de la dernière voie utilisée sont exploités pour élaborer les signaux pour couper et alimenter soit partiellement soit totalement les circuits émetteur et récepteur.

D'autre part le système de transmission d'informations est remarquable en ce que lorsque l'on utilise la transmission des informations d'état des voies pour couper et alimenter soit partiellement soit totalement les circuits émetteur et récepteur, l'émission d'une voie de données après plusieurs voies libres est immédiatement précédée de l'émission d'une voie de rythme.

A présent chaque voie dure le temps de n voies élémentaires et les informations de validation de voies sont utilisées pour mettre hors et en service les organes 101L (signal MP) et les organes 101C (signal MT) du circuit émetteur 101, au lieu de baser la mise hors et en service uniquement sur le rang de la dernière voie utilisée.

La commande de mise en marche partielle du circuit émetteur est élaborée à partir d'un compteur 1178 et d'un comparateur 1179 qui compare en permanence l'état de ce compteur avec le numéro de la dernière voie utilisée NDV. Le signal NDV est pris à l'entrée du multiplexeur 109, il est ainsi toujours présent à l'entrée du comparateur 1179. La fréquence d'émission des informations relatives aux voies issue du compteur de voies 1170 est l'horloge qui est appliquée à une entrée d'un circuit ET 1180, à l'autre entrée du circuit 1180 est appliqué le signal de sortie inversé du comparateur 1179, le signal de sortie du circuit 1180 permet ainsi de faire avancer le compteur au rythme de l'horloge. Dès qu'il y a égalité entre le numéro de la dernière voie utilisée et l'état du compteur 1178, celui-ci est arrêté. Le signal du compteur de trames 1171 décodé par le décodeur 1181 permet la remise à zéro du compteur 1178 (signal RZ) après détection de la dernière voie de la trame. La sortie du comparateur 1179 est appliquée à l'entrée d'une bascule 1182 dont la deuxième entrée reçoit l'horloge émise à la fréquence d'émission des informations relatives aux voies. La sortie de la bascule 1182 commande ainsi la mise en marche partielle du circuit émetteur. La sortie de la bascule 1182 est reliée à une entrée d'un circuit OU 1183, un créneau de temps est imposé sur la deuxième entrée du circuit OU 1183, ce créneau est obtenu par décodage des signaux (décodeur 1181) de la base de temps et a pour durée les trois dernières voies de la trame. Le signal à la sortie du circuit 1183 assure ainsi la mise en marche partielle trois voies avant le début de la trame (signal MP).

La mise en marche totale est assurée à partir d'une mémoire 32 × 1 bits 1184 contenant l'occupation des voies. Cette mémoire est écrite par un microprocesseur (signal MPE) qui peut être celui de l'unité de commande 100, (dans ce cas, il suffit de connecter et d'utiliser la ligne de données BUSD), elle est lue sous la commande des adresses CA (en conservant l'exemple proposé précédemment: A3, A4, A5, A6, A7). Le temps d'accès à la mémoire est partagé en deux: un temps réservé à l'écriture et un temps réservé à la lecture. L'écriture est faite par le microprocesseur uniquement lorsqu'il doit changer le contenu de la mémoire (affectation d'une voie ou suppression d'une voie). Pour cela, le microprocesseur délivre sur son bus d'adresses MPA (ou BUSA qu'il suffit de connecter si l'unité de commande 100 est utilisée), l'adresse où il veut écrire et sur son bus de données MPE la nouvelle information à écrire. Cette séparation entre les temps d'écriture et de lecture est réalisée au moyen d'un multiplexeur 1186 à l'entrée duquel se trouvent les adresses de lecture et d'écriture. La commande de ce multiplexeur est issue d'un circuit de décodage 1173 dont les entrées proviennent des compteurs 1168, 1170 et 1171. La lecture de la mémoire est faite systématiquement sous la commande des adresses CA présentes à la sortie des compteurs 1170 et 1171 avec deux voies d'avance. En effet, les adresses CA, commandant la lecture de la mémoire 1184, qui sont présentées à l'entrée du circuit additionneur 1185 sont délivrées par le circuit additionneur 1185 avec deux temps d'avance, le circuit 1185 décalant systématiquement les adresses CA de 2 pas. La sortie du circuit 1185 est reliée à une entrée du multiplexeur 1186 dont une deuxième entrée reçoit le signal d'adresse du microprocesseur (signal MPA, ou ligne d'adresses BUSA), la sortie du multiplexeur étant connectée à la mémoire 1184. La sortie de la mémoire est reliée à l'entrée d'un registre à décalage 1187 le résultat de la lecture est mémorisé trois fois afin de commander la mise en marche deux voies avant la voie réellement occupée, et de permettre ainsi d'émettre une voie de rythme avant la voie réellement occupée. Un circuit OU 1188 a trois de ses entrées reliées aux trois sorties du registre 1187 représentant la lecture de la mémoire plus les deux lectures précédentes. Une quatrième entrée de ce circuit OU 1188 reçoit une commande de créneau de temps provenant du circuit de décodage 1181. La durée de ce créneau correspond à la dernière voie de la trame (donc à la voie précédant la nouvelle trame) et aux trois voies de service M0, M1 et M2. La sortie du circuit OU 1188 est branchée à l'entrée d'un circuit ET 1189 qui commande la mise en marche totale (signal MT) du circuit émetteur 101 lorsque sa deuxième entrée voit le signal de mise en marche partielle (MP) actif, validant ainsi la mise en marche totale.

Le temps de retard de 20 µs vis à vis de la commande des organes 101C est pris à titre d'exemple. Si cette commande agit uniquement sur des amplificateurs de sortie, le temps de réponse est négligeable. Dans ces conditions la commande de mise en marche totale MT doit arriver au moment où l'on veut effectivement émettre. Sur le schéma de la figure 7 il suffit d'effectuer la lecture de la mémoire 1184 avec un temps d'avance. Le circuit 1185 décale alors les adresses CA de un pas et le registre à décalage 1187 ne comprend que deux étages: le résultat de la lecture de la mémoire 1184 est mémorisée deux fois. Les deux sorties du registre 1187 sont reliées à deux entrées du circuit OU 1188. Le créneau de temps issu du circuit 1181 et relié à la troisième entrée du circuit OU 1188 correspond seulement aux trois voies de service M0, M1, M2. Dans ces conditions l'émission commence donc au début de la trame (voie M0) et s'il y a plusieurs voies inoccupées, elle commence une voie avant la première voie occupée suivante, permettant donc d'émettre la séquence de rythme durant cette voie.

Selon un autre aspect de l'invention, le système de transmission est remarquable en ce que la transmission du numéro de la dernière voie utilisée est seule exploitée pour élaborer les signaux pour couper et alimenter soit partiellement soit totalement les circuits émetteur et récepteur.

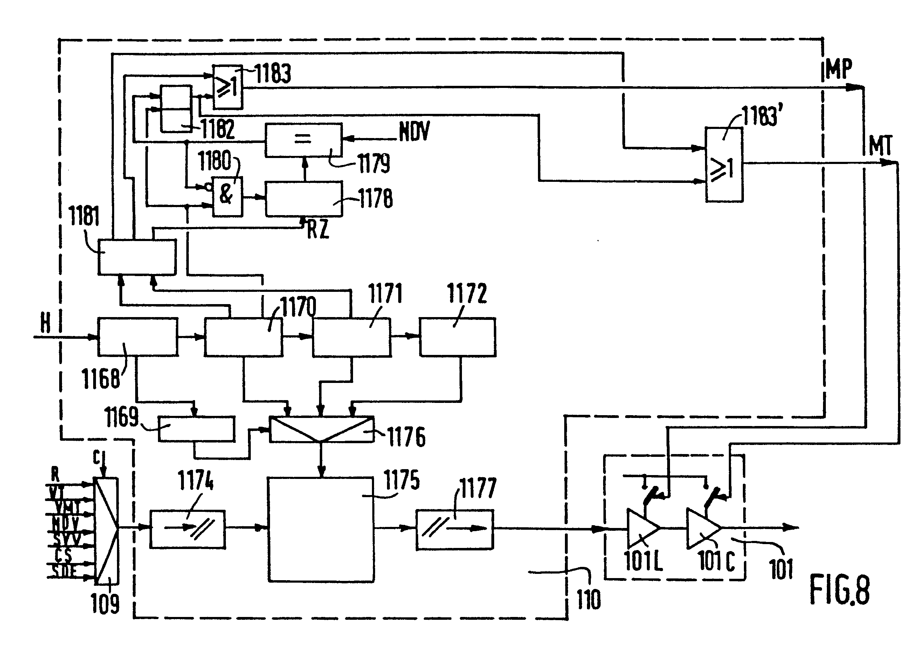

En effet on peut, si l'on veut, ne pas utiliser les informations d'occupation individuelles des voies et élaborer les commandes du dispositif 101 uniquement à partir de l'information du numéro de la dernière voie utilisée NDV. Dans ce cas la commande de la mise en marche totale n'est plus faite à partir du contenu de la mémoire 1184 mais à partir de l'information délivrée par la sortie de la bascule 1182 (voir figure 8). Si le temps de réponse du circuit 101C est équivalent à la durée d'une voie, ce signal est relié à une entrée d'un circuit OU 1183' et un créneau de temps est imposé sur la deuxième entrée du circuit OU 1183'. Ce créneau est délivré par le circuit de décodage 1181 à partir des signaux issus des compteurs 1170 et 1171 et correspondant à la dernière voie de la trame. A la sortie du circuit 1183' est alors le signal de commande MT. Si le circuit 101C est uniquement constitué par des amplificateurs son temps de réponse est négligeable et dans ces conditions le signal de commande MT est directement issu de la bascule 1182: l'émission commence à la voie M0 et dure sans interruption jusqu'à la dernière voie occupée. Le dispositif de la figure 8 est identique à celui de la figure 7 quant à l'élaboration du signal de mise en marche partielle et à la transformation du multiplex. Seule l'élaboration du signal de mise en marche totale est différente et pour cela, les circuits 1173, 1184, 1185, 1186, 1187, 1188 et 1189 ainsi que les signaux d'adresses CA sont supprimés ou ne sont plus utilisés, alors qu'est ajouté le circuit 1183'.

Sur la figure 9 est proposé le schéma synoptique du circuit récepteur 211 identique au dispositif 111. A la réception le dispositif 211 est très semblable au dispositif 110 existant à l'émission, cependant la base de temps n'est plus créée localement mais est reconstituée à partir des informations existant dans le multiplex incident. Un dispositif de recherche de verrouillage de trame va positionner correctement les compteurs de la base de temps en fonction des mots de verrouillage existant dans le multiplex.

La retransformation du multiplex allongé en un multiplex élémentaire classique est effectuée à l'aide d'une mémoire 2130 pouvant contenir deux trames du multiplex allongé. Les informations (référencées DA' sur la figure) contenues dans le multiplex incident, présentes à la sortie du circuit récepteur 203 ainsi que l'horloge H' émise par le dispositif de commande et de mémorisation 200 et qui est synchrone de l'horloge du multiplex sont transmises vers l'entrée du dispositif 211 où elles sont converties par le convertisseur série-parallèle 2131, avant d'être écrites dans la mémoire 2130. Les informations de sortie de la mémoire sont alors reconverties par un convertisseur parallèle-série 2132 pour être transmises vers le réseau de connexion temporel de réception 207 et le dispositif de commande et de mémorisation 200.

Pour reconstituer le multiplex élémentaire comportant 32 voies V (selon l'exemple précédent), il faut reconstituer une base de temps à partir des informations de verrouillage de trames contenues dans la voie M1 (deuxième voie du multiplex allongé). Le premier octet de la voie M1 est toujours constitué par le mit de verrouillage de trame. Le critère de perte et de reprise de verrouillage de trame peut être choisi, à valeur d'exemples, selon les règles suivantes:

— critère de perte: le verrouillage est considéré perdu lorsqu'a été constatée trois fois de suite l'absence d'au moins un mot de verrouillage de trame parmi les quatre mots de verrouillage de trame que comporte la voie M1;

— critère de réponse: le verrouillage est considéré repris lorsque l'alternance présence et absence du mot de verrouillage de trame a été constatée quatre fois.

Le dispositif de recherche de verrouillage de trame 2133, aux entrées duquel les informations DA' et l'horloge H' sont aussi transmises, est un dispositif classique qui compte le nombre d'absences de mot de verrouillage avant de décider de la perte de verrouillage de trame délivrant alors un signal de perte de verrouillage de trame PVT. A partir de ce moment il recherche le motif de verrouillage sur tous les bits entrants. Dès qu'il trouve un mot de verrouillage il attend d'avoir vérifié quatre fois sa présence et son absence avant de décider de la reprise de verrouillage.

La base de temps est reconstituée ensuite au moyen d'une suite de compteurs synchrones de l'horloge H', la sortie du dispositif de recherche de verrouillage de trame 2133 fournissant les informations nécessaires à la reconstitution de la base de temps à l'entrée des différents compteurs. Le compteur 2134 avançant au rythme du bit, le compteur de voies élémentaires 2135, qui est un compteur par 8 qui donne les voies élémentaires contenues dans une voie du multiplex allongé (adresses A0, A1, A2), le compteur de voies 2136 qui donne les adresses des voies du multiplex allongé (adresses A3, A4, A5, A6, A7) et enfin la bascule de choix de mémoire 2137 qui délivre le fil d'adresse A8 pour indiquer (selon l'état de A8) la moitié de la mémoire 2130 concernée. Les informations présentes au niveau des compteurs 2135, 2136 et de la bascule 2137 sont transmises vers le multiplexeur 2138 qui fournit les informations d'adresse à la mémoire 2130 assurant ainsi la retransformation du multiplex allongé en un multiplex élémentaire. Le temps d'accès à la mémoire 2130 au rythme des voies V est partagé en deux: un temps pour l'écriture et un temps pour la lecture. La commande C' du multiplexeur 2138 permettant de délivrer les adresses à la mémoire est issue d'un circuit de décodage 2139 commandé par des signaux provenant du compteur de bits 2134 et du compteur de voies 2135.

L'écriture dans la mémoire se fait dans la moitié indiquée par l'état de A8, aux adresses fixées par les commandes A0, A1, A2, A3, A4, A5, A6, A7.

La lecture de la mémoire se fait dans la moitié indiquée par l'état de $\overline{A8}$, aux adresses fixées par les commandes A5, A6, A7, A0, A1, A2, A3, A4.

L'écriture dans la mémoire se fait ainsi dans l'ordre: 0, 1, 2, 3, 4, 5, 6, 7, 8, 9, ..., 253, 254, 255, tandis que la lecture se fait dans l'ordre: 0, 8, 16, 24, 32, ..., 248, 1, 9, 17, 25, ..., 247, 255.

La base de temps ainsi reconstituée permet d'extraire le numéro de la dernière voie utilisée qui se trouve dans les octets impairs de la voie M1. Pour se mettre à l'abri des erreurs de transmission deux numéros consécutifs identiques doivent être reçus pour être pris en compte. Cette fonction est réalisée au moyen de deux registres 2140, 2141 dans lesquels les octets du multiplex entrant sont transférés aux instants $A0\overline{A1}$ de la voie M1 (signal T1 émis vers le registre 2140) et A0A1 de la voie M1 (signal T2 émis vers le registre 2141) qui représentent les octets de rang 4n + 1 et 4n + 3 de la voie M1 avec n = 0 ou 1. Les signaux T1 et T2 sont obtenus par le décodeur 2142 à partir du compteur 2135. En cas d'égalité entre les contenus des deux registres 2140 et 2141, constatée par le comparateur 2143, ce contenu est transféré dans un troisième registre 2144 à l'instant $\overline{A0}$ (signal T3 émis par le compteur 2135), validé par une porte ET 2145 qui reçoit le signal de sortie du comparateur 2143 sur une entrée et le signal T3 sur son autre entrée. Le contenu de ce troisième registre correspondant au numéro de la dernière voie utilisée NDV est systématiquement comparé, par le circuit comparateur 2146, à l'état d'un compteur de voies 2147 afin de commander la mise en marche partielle MP' des organes 203L du circuit récepteur 203. Le fonctionnement est alors identique au fonctionnement du dispositif 110 décrit à l'émission. Un signal d'horloge provenant du compteur de voies élémentaires 2135, dont la fréquence correspond à la fréquence des informations relatives aux voies M du multiplex allongé, est transmis vers une entrée d'une porte ET 2148 et vers une entrée d'une bascule 2149. La sortie du comparateur 2146 est appliquée d'une part à la deuxième entrée de la porte ET 2148 après avoir été inversée et d'autre part à la deuxième entrée de la bascule 2149. Le signal de sortie du circuit ET 2148 permet ainsi de faire avancer le compteur de voies 2147 au rythme du signal d'horloge, tandis que le signal de sortie de la bascule 2149 est le signal de commande de la mise en marche partielle du circuit récepteur 203. Des informations du compteur de voies du multiplex allongé 2135 sont décodées par le décodeur 2150 qui, d'une part provoque la remise à zéro du compteur 2147 après détection de la dernière voie de la trame et d'autre part transmet un créneau de temps généré par la base de temps vers une entrée d'un circuit OU 2151. La durée de ce créneau de temps correspond aux trois voies précédant le début de la nouvelle trame. Le signal de commande de la mise en marche partielle du circuit récepteur sortant de la bascule 2149 est envoyé sur une deuxième entrée du circuit OU 2151. Ainsi le signal à la sortie du circuit OU 2151 assure la mise en marche partielle MP' trois voies avant le début de la trame.

La mise en marche totale est assurée à partir d'une mémoire 32 × 1 bits 2152 contenant l'état d'occupation des voies qui peut être écrite soit par un microprocesseur (qui peut être celui de l'unité de commande 200), si l'occupation des voies est transmise par canal sémaphore soit systématiquement à partir d'une base de temps multitrame 2153 reconstituée à l'aide du multiplex élémentaire (signal pris à la sortie du convertisseur parallèle série 2132) et comprenant des compteurs de multitrame. Le signal de sortie du convertisseur parallèle-série 2132 est appliqué à une entrée d'un dispositif de recherche de verrouillage de multitrame 2154 de configuration semblable au dispositif 2133. Les informations présentes au niveau des compteurs 2135 et 2136 sont aussi transmises vers le dispositif 2154. Si une perte de verrouillage de multitrame est constatée le dispositif 2154 délivre un signal de perte de verrouillage multitrame PVM et recherche le motif de verrouillage identiquement au dispositif 2133, si par contre le verrouillage est conservé ou restauré par le dispositif 2154, la reconstitution de la base de temps de multitrame est effectuée et les informations transitant par le multiplexeur 2155 sont transmises à la mémoire 2152.

Le temps d'accés à la mémoire 2152 est partagé en deux: un temps réservé à la lecture et un temps réservé à l'écriture. Cette mémoire est en fait organisée en 16 × 2 bits puisque dans la voie V2 des trames paires on trouve l'état d'occupation de deux voies. L'écriture dans la mémoire est faite durant la voie V2 des trames paires aux adresses délivrées par le compteur de multitrame 2153. La mémoire est lue sous la commande des adresses CA (A3, A4, A5, A6, A7) présentes à la sortie du compteur 2136 du multiplex allongé, avec deux voies d'avance. En effet les adresses CA commandant la lecture de la mémoire 2152 sont délivrées par le circuit additionneur 2156 avec deux temps d'avance, la sortie du circuit 2156 étant reliée à une entrée du multiplexeur 2155. La commande du multiplexeur 2155 est issue d'un circuit de décodage 2157 commandé par des signaux provenant de la base de temps multitrame 2153 et des compteurs de voies 2135 et 2136. Les deux sorties de la mémoire sont connectées aux entrées d'un multiplexeur 2158 commandé par le signal T4 à l'instant A3, du compteur 2135 permettant de choisir alternativement l'une ou l'autre des sorties. La sortie du multiplexeur 2158 est connectée à l'entrée d'un circuit à décalage 2159 et mémorisée trois fois afin de commander la mise en marche deux voies avant la voie réellement occupée. Un circuit OU 2160 a trois entrées reliées aux trois sorties du registre 2159 représentant la lecture de la mémoire plus les deux lectures précédentes. La quatrième entrée du circuit OU 2160 reçoit un créneau de temps issu du circuit décodeur 2150. La durée de ce créneau correspond à la voie précédant la nouvelle trame (dernière voie de la trame) et aux trois voies de service M0, M1, M2 de la trame. La sortie du circuit OU 2160 est branchée à l'entrée d'un circuit ET 2161 qui commande la mise en marche totale (signal MT') des organes 203C du circuit récepteur 203 lorsque sa deuxième entrée voit le signal de mise en marche partielle MP' actif, validant ainsi la mise en marche totale.

D'autre part le système de transmission d'informations qui comporte entre autres, inclus dans le dispositif de retransformation du multiplex et de commande du circuit récepteur, des dispositifs de recherche de verrouillage de trame et de multitrame fournissant respectivement un signal de perte de verrouillage de trame et/ou un signal de perte de verrouillage de multitrame lorsque des pertes de verrouillage de trame et/ou de multitrame sont détectées, est remarquable en ce qu'il comporte en outre, inclus dans le dispositif de retransformation du multiplex et de commande du circuit récepteur, un circuit d'alarme fournissant un signal d'alarme pour imposer la commande d'alimentation totale du circuit récepteur après détection des pertes de verrouillage de trame et/ou de multitrame.

En effet en cas de perte de verrouillage de trame ou de multitrame, un signal d'alarme est délivré au moyen d'un circuit d'alarme OU 2162 aux entrées duquel sont transmis les signaux de perte de verrouillage de trame PVT et de multitrame PVM et dont la sortie fournit le signal d'alarme AL. Ce signal AL, quand il existe est transmis d'une part vers une troisième entrée du circuit OU 2151 imposant la mise en marche des organes 203L et d'autre part vers une des deux entrées d'un circuit OU 2163 qui reçoit sur sa deuxième entrée, le signal de mise en marche totale, provoquant aussi la mise en marche totale des organes 203C du circuit récepteur, tant que les bases de temps ne seront pas correctement calées. Ces commandes sont nécessaires pour permettre à la station de disposer de tout le multiplex au démarrage ou en cas de décalage et de pouvoir ainsi recaler ses bases de temps. Ainsi tant que les bases de temps ne sont pas correctement positionnées et que l'on ne peut pas recevoir correctement les différentes signalisations, les commandes MP' et MT' sont actives.

Si au lieu d'écrire les informations d'occupation des voies dans la mémoire 2152 à partir des signalisations contenues dans la voie V2 des trames paires ces informations sont écrites par un microprocesseur au moyen d'un dialogue par canal sémaphore, microprocesseur qui peut être celui de l'unité de commande 200, le circuit de la mémoire est légèrement modifié. La mémoire est organisée en 32 × 1 bits, les informations à écrire étant délivrées par le bus de données MPE' du microprocesseur qui peut être la ligne de données BUSD' du microprocesseur de l'unité de commande 200. L'adresse d'écriture dans la mémoire provient du bus d'adresses MPA' du microprocesseur qui peut être la ligne d'adresses BUSA' de l'unité de commande 200 et l'adresse de lecture est toujours le signal CA (A3, A4, A5, A6, A7) présent à la sortie du compteur 2136 avec deux voies d'avance. Il n'y a plus besoin du multiplexeur 2158 à la sortie de la mémoire.

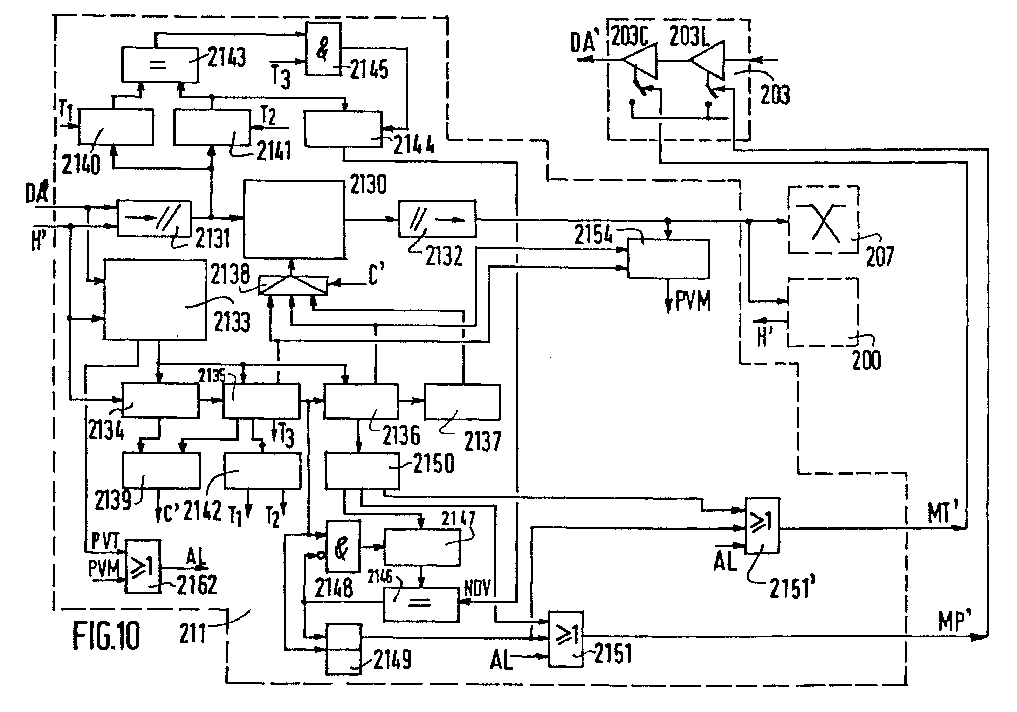

On peut, si l'on veut, ne pas utiliser les informations d'occupation individuelle des voies et élaborer les commandes du dispositif 203 uniquement à partir de l'information du numéro de la dernière voie utilisée, NDV. Dans ce cas la commande de la mise en marche partielle n'est plus faite à partir du contenu de la mémoire 2152 mais à partir de l'information délivrée par la sortie de la bascule 2149 (voir figure 10). Ce signal est relié à une entrée d'un circuit OU 2151' et un créneau de temps est imposé sur une deuxième entrée du circuit OU 2151'. Ce créneau délivré par le circuit de décodage 2150 à partir des signaux issus du compteur 2136. Ce créneau de temps correspond à la dernière voie M de la trame. Ce circuit OU 2151' possède une troisième entrée qui est reliée à la sortie du circuit OU 2162 délivrant le signal d'alarme AL en cas de perte de verrouillage de trame et/ou de multitrame. La sortie du circuit OU 2151' délivre le signal de mise en marche totale MT' qui commence donc une voie avant le début de la trame et dure jusqu'à la dernière voie utilisée sauf en cas d'alarme où il est permanent tant que les bases de temps ne sont pas correctement positionnées. Le dispositif de la figure 10 est identique à celui de la figure 9 quant à l'élaboration du signal de mise en marche partielle et à la retransformation du multiplex. Seule l'élaboration du signal de mise en marche totale est différente et pour cela, les circuits 2152, 2153, 2155, 2156, 2157, 2158, 2159, 2160, 2161, 2163 ainsi que les signaux de commande T4 et d'adresses CA sont supprimés ou ne sont pas utilisés, alors qu'est ajouté le circuit 2151'.

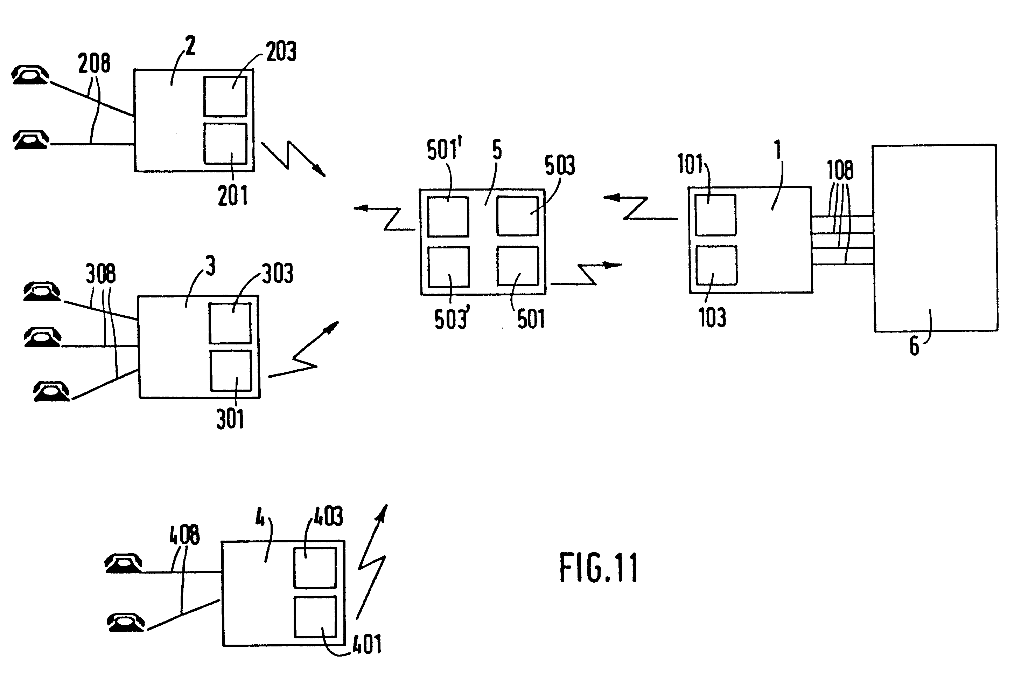

Sur la figure 11 est représentée une variante du système de transmission mettant en oeuvre plus de deux stations. La transmission des informations est effectuée par voie hertzienne entre la station centrale 1 rattachée à un central téléphonique 6 au moyen de paires téléphoniques 108 et une pluralité de stations distantes 2, 3, 4, 5, ... Les stations distantes peuvent être des stations terminales d'abonnés telles que les stations 2, 3, 4 reliées aux abonnés respectivement au moyen de paires téléphoniques 208, 308, 408, et peuvent être aussi des stations répétrices telle que la station 5, à laquelle des abonnés peuvent être aussi directement rattachés. Les stations centrales, répétrices et terminales sont reliées entre elles par voie radio, émettant et recevant des informations au moyen de circuits émetteurs et récepteurs. La station centrale est équipée du circuit émetteur 101 et du circuit récepteur 103, les stations terminales 2, 3, 4 sont équipées respectivement des circuits émetteurs 201, 301, 401 et des circuits récepteurs 203, 303, 403, enfin les stations répétrices et en particulier la station répétrice 5 est équipée d'un circuit émetteur 501 et d'un circuit récepteur 503 pour émettre et recevoir des informations vers et de la station centrale 1 et est aussi équipée d'un circuit émetteur 501' et d'un circuit récepteur 503' pour émettre et recevoir des informations vers et des stations terminales 2, 3, 4, ...

Dans le cas d'un système de transmission à plus de deux stations tel que celui décrit ci-dessus, il est alors préférable de faire appel au principe de l'AMRT (Accès Multiple à Répartition dans le Temps) dans le sens de transmission stations distantes vers station centrale, ceci pour que toutes les stations voisines, telles que les stations 2, 3, 4 puissent émettre sur une seule fréquence radio. Les retards des différentes stations sont réglés de telle façon que les informations arrivent correctement calées dans le temps au niveau des (ou de la) stations répétrices (station 5) et de la station centrale 1. Les informations relatives à une voie, émises par une station sont regroupées sous forme d'un paquet avec un temps de garde, de manière à ce qu'il n'y ait pas de chevauchement entre les différents paquets au niveau d'une station répétrice ou de la station centrale. Un tel procédé est décrit dans la publication précédemment citée «COMMUTATION ET TRANSMISSION», n° 3 de septembre 1981, le titre de l'article étant «Système de téléphonie rurale IRT 1500». Dans le sens station centrale vers stations distantes, l'organisation du multiplex décrite précédemment est bien entendu conservée.

Le système de transmission d'informations utilisant le principe de l'AMRT dans le sens de transmission stations distantes vers station centrale est remarquable en ce qu'il utilise les moyens pour affecter les paquets d'informations côte à côte dans la trame. En effet dans ce sens de transmission, le principe de concentration des paquets affectés côte à côte par exemple en début de trame est conservé, ceci afin de faciliter les commandes d'activation des circuits émetteur et récepteur des (ou de la) stations répétrices. Les moyens utilisés sont analogues aux moyens 110, 211 décrits respectivement à l'aide des figures 7, 8, 9 et 10 après mise en oeuvre du procédé décrit avec la figure 6.

En effet les informations d'une voie sont émises sous la forme d'un paquet pouvant avoir, par exemple, la structure suivante: plusieurs octets de rythme, un octet de début de paquet, un octet de signalisation de voie et des octets de données relatifs à la voie concernée. Les paquets sont séparés par un temps de garde pour éviter tout chevauchement à la réception. On a une base de temps pour le trame paquets. Pour l'émission, la position de cette base de temps, par rapport à la base de temps reconstituée à partir du multiplex reçu, est réglée de manière à ce que les paquets arrivent correctement calés dans les stations telle que les stations 5 ou 1.

A l'émission on élabore des signaux de commande de mise en marche partielle et totale, MP et MT. Le signal MP commence avant le début de la trame et dure jusqu'à la fin du dernier paquet utilisé. Le numéro du dernier paquet utilisé est extrait du multiplex reçu dans la station. Ce signal MP est réalisé à partir d'un créneau de temps fourni par la base de temps de la trame paquet et à partir du signal donnant l'égalité entre un compteur de temps et le numéro du dernier paquet utilisé. Le signal MT est délivré par une mémoire d'occupation des paquets. Cette mémoire est lue au rythme d'émission des paquets. Le résultat de la lecture de cette mémoire n'est mémorisé qu'une seule fois car le début du paquet émis contient des informations de rythme.

A la réception on élabore également des signaux de commande de mise en marche partielle MP' et MT'. Le signal MP' commence avant le début de la trame et dure jusqu'à la fin du dernier paquet utilisé. Il est également réalisé à partir d'un créneau de temps fourni par la base de temps de la trame paquet et à partir du signal donnant l'égalité entre un compteur de temps et le numéro du dernier paquet utilisé. Le signal MT' est délivré par une mémoire d'occupation des paquets. Cette mémoire est lue au rythme des paquets. Cette lecture est faite avant l'arrivée d'un paquet (20 μs environ) puis mémorisé au début du paquet. Un circuit OU réalisé à partir de ces deux informations donne donc un signal qui commence 20 μs avant le début d'un paquet utilisé et se termine à la fin de ce paquet.

Conformément à l'idée de l'invention les circuits émetteurs 101, 501' sont précédés d'un dispositif de transformation du multiplex et de commande de circuit émetteur tel que le dispositif 110 de la station 1, les circuits récepteurs 203, 303, 403, 503, sont suivis d'un dispositif de retransformation du multiplex et de commande de circuit récepteur tel que le dispositif 211 de la station 2, les circuits émetteurs 201, 301, 401 et 501 étant précédés des moyens analogues aux moyens 110, moyens analogues qui à l'émission viennent d'être décrits ci-avant, les circuits récepteurs 103 et 503' étant suivis des moyens analogues aux moyens 211, moyens analogues qui à la réception viennent également d'être décrits ci-avant.

## Revendications

1. Système de transmission d'informations entre au moins deux stations (1, 2) pour transmettre des informations provenant de voies libres ou occupées, chaque station disposant d'au moins un circuit émetteur (101, 201) et un circuit récepteur (103, 203) radio alimentés au moyen d'une source d'alimentation (U) et de moyens (100, 200) pour détecter les voies libres ou occupées, caractérisé en ce qu'il possède des moyens (100') coopérant avec les moyens de détection (100, 200) pour mettre en oeuvre un procédé pour élaborer un multiplex temporel formé d'une trame élémentaire de durée T, dans lequel les informations provenant des voies occupées sont regroupées côte à côte dans ladite trame élémentaire et des moyens (110, 111, 210, 211) pour réduire la consommation du circuit émetteur et du circuit récepteur à partir de la détection de voies libres et pour alimenter normalement le circuit émetteur et le circuit récepteur à partir de la détection de voies occupées.

2. Système de transmission d'informations selon la revendication 1, dans lequel les trames multiplex élémentaires transportent des informations relatives à des voies de service et des informations relatives à des voies de données, caractérisé en ce qu'il comporte en outre des moyens pour regrouper les trames multiplex élémentaires n par n, les voies de service et les voies de données occupées étant regroupées n par n et côte à côte dans la nouvelle trame obtenue.

3. Système de transmission d'informations selon l'une des revendications 1 à 2 dans lequel chaque station, centrale ou distante, est équipée d'au moins un circuit émetteur et un circuit récepteur, caractérisé en ce qu'il comporte de plus des moyens pour couper et alimenter soit partiellement soit totalement les circuits émetteur et récepteur.

4. Système de transmission d'informations selon l'une des revendications 1 à 3, dont les voies de service transportent le signal de rythme, les mots de verrouillage de trame et de multitrame et le canal sémaphore, caractérisé en ce que le signal de rythme est transmis en tout début de trame multiplex.

5. Système de transmission d'informations selon l'une des revendications 1 à 4, caractérisé en ce que l'information d'état des voies (libres ou occupées) et le numéro de la dernière voie utilisée sont transmis dans le multiplex.

6. Système de transmission d'informations selon l'une des revendications 1 à 5, caractérisé en ce que la transmission des informations d'état des voies (libre ou occupé) et le numéro de la dernière voie utilisée sont exploités pour élaborer les signaux pour couper et alimenter soit partiellement soit totalement les circuits émetteur et récepteur.

7. Système de transmission d'informations selon l'une des revendications 1 à 6, caractérisé en ce que lorsque l'on utilise la transmission des informations d'état des voies pour couper et alimenter soit partiellement soit totalement les circuits émetteur et récepteur, l'émission d'une voie de données, après plusieurs voies libres, est immédiatement précédée de l'émission d'une voie de rythme.

8. Système de transmission d'informations selon l'une des revendications 1 à 7, caractérisé en ce que la transmission du numéro de la dernière voie utilise est seule exploitée pour élaborer les signaux pour couper et alimenter soit partiellement soit totalement les circuits émetteur et récepteur.

9. Système de transmission d'informations selon l'une des revendications 1 à 8 comportant entre autres, inclus dans le dispositif de retransformation du multiplex et de commande du circuit récepteur, des dispositifs de recherche de verrouillage de trame et de multitrame fournissant respectivement un signal de perte de verrouillage de trame et/ou un signal de perte de verrouillage de multitrame lorsque des pertes de verrouillage de trame et/ou de multitrame sont détectées, caractérisé en ce qu'il comporte en outre, inclus dans le dispositif de retransformation du multiplex et de commande du circuit récepteur, un circuit d'alarme fournissant un signal d'alarme pour imposer la commande d'alimentation totale du circuit récepteur après détection des pertes de verrouillage de trame et/ou de multitrame.

10. Système de transmission d'informations selon l'une des revendications 1 à 9, le système de transmission disposant d'une pluralité de stations utilisant le principe de l'AMRT dans le sens de transmission des stations distantes vers la station centrale, caractérisé en ce qu'il utilise les moyens de l'invention pour affecter les paquets d'informations côte à côte dans la trame.

## Claims

1. A system for the transmission of information between at least two stations (1, 2) to transmit information from free or engaged channels, each station having at least one radio transmission (101, 201) and one radio reception circuit (103, 203) powered by a power source (U) and means for detecting (100, 200) the three or engaged channels, in which there are means (100') working together with the detecting means ((100, 200) to set up a process for creating a time multiplex consisting of an elementary field of duration T, in which the information from engaged channels is grouped side-by-side in said elementary field and means (110, 111, 210, 211) for reducing the power consumption of the transmission and reception circuits from the detection of free channels and for providing a normal power supply for the transmission and reception circuits from the detection of engaged channels.

2. An information transmission system as claimed in Claim 1, wherein the elementary multiplex fields carry information concerning service and data channels, in which there are also means for grouping the elementary multiplex fields n by n, with the service and engaged data channels grouped n by n and side-by-side in the resultant new field.

3. An information transmission system as claimed in Claim 1 and 2 wherein each station, central or distant, is fitted with at least one transmission and one reception circuit, in which there are also means for partly or totally cutting off and powering the transmission ans reception circuits.

4. An information transmission system as claimed in one of the Claims 1 to 3, the service channels of which carry the rhythm signal, the field and multi-field lock words and the semaphore channel, in wich the rhythm signal is transmitted at the very start of the multiplex field.

5. An information transmission system as claimed in one of Claims 1 to 4, in which the channel status information (free or engaged) and the number of the last channel used are transmitted in the multiplex.

6. An information transmission system as claimed in one of Claims 1 to 5, in which the transmission of the channel status information (free or engaged) and the number of the last channel used are used to draw up the signals for partly or totally cutting off and powering the transmission and reception circuits.

7. An information transmission system as claimed in one of Claims 1 to 6, in which, when the transmission of the channel status information is used to cut off and power the transmission and reception circuits partly or totally, the transmission of a data channel after several free channels is immediately preceded by the transmission of a rhythm channel.

8. An information transmission system as claimed in one of Claims 1 to 7, in which the transmission of the number of the last channel used is used only to draw up the signals to cut off and power the transmission and reception circuits partly or totally.

9. An information transmission system as claimed in one of Claims 1 to 8, also comprising, included in the device for reconverting the multiplex and controlling the reception circuit, devices for detecting the field lock supplying a field and/or multi-field lock loss signal when field and/or multi-field lock losses are detected, in which there is also, included in the device for reconverting the multiplex and controlling the reception circuit, devices for detecting the field lock supplying a field and/or multi-field lock loss signal when field and/or multi-field lock losses are detected, in which there is also, included in the device for reconverting the multiplex and controlling the reception circuit, an alarm circuit giving an alarm signal to dictate the full power control of the reception circuit after the detection of field and/or multi-field lock losses.

10. An information transmission system as claimed in one of Claims 1 to 9, with a number of stations using the TDMA principle in the transmission direction from the distant ot the central stations, in which use is made of the means of the invention for allocating the information packets side-by-side in the field.

**Patentansprüche**

1. Datenübertragungssystem zwischen mindestens zwei Stationen (1, 2) zum Übertragen von Daten, die von freien oder besetzten Kanälen herrühren, wobei jede Station über mindestens einen Funksendekreis (101, 201) und einen Funkempfangskreis (103, 203) verfügt, die von einer Speisequelle (U) gespeist werden, sowie über Mittel (100, 200) zum Detektieren der freien oder besetzten Kanäle, dadurch gekennzeichnet, dass das System Mittel (100') aufweist, die mit den Detektionsmitteln (100, 200) zusammenarbeiten zum Ingangsetzen eines Verfahrens zum Durchführen eines Zeitmultiplexes, das aus einem Grundraster mit der Dauer T besteht, in dem die von den besetzten Kanälen herrührenden Daten innerhalb des genannten Grundrasters nebeneinanderliegend gegliedert werden, sowie Mittel (110, 111, 210, 211) zum Verringern der Leistungsaufnahme des Sende- sowie Empfangskreises bei Detektion freier Kanäle und zum normalerweisen Speisen des Sende- und Empfangskreises bei Detektion besetzter Kanäle.

2. Datenübertragungssystem nach Anspruch 1, bei dem die Grundmultiplexraster Daten in bezug auf die Bedienungskanäle und Daten in bezug auf die Datenkanäle transportieren, dadurch gekennzeichnet, dass das System ausserdem Mittel aufweist zum n-weisen Neugliedern der Grundmultiplexraster, wobei die besetzten Dienst- und Datenkanäle n-weise sowie nebeneinanderliegend in dem neuen erhaltenen Raster neugegliegert werden.

3. Datenübertragungssystem nach einem der Ansprüche 1 oder 2, bei dem jede Zentral- oder Fernstation mit mindestens einem Sende- und einem Empfangskreis versehen ist, dadurch gekennzeichnet, dass das System ausserdem Mittel aufweist zum vollständigen oder teilweisen Sperren bzw. Speisen der Sende- und Empfangskreise.

4. Datenübertragungssystem nach einem der Ansprüche 1 bis 3, bei dem die Dienstkanäle das Taktsignal, die Raster- und Multirasterverriegelungsworte und den Semaphorkanal transportieren, dadurch gekennzeichnet, dass das Taktsignal ganz am Anfang des Multiplexrasters übertragen wird.

5. Datenübertragungssystem nach einem der Ansprüche 1 bis 4, dadurch gekennzeichnet, dass die Kanalzustandsdaten (frei oder besetzt) und die Nummer des zuletzt verwendeten Kanals im Multiplex übertragen werden.

6. Datenübertragungssystem nach einem der Ansprüche 1 bis 5, dadurch gekennzeichnet, dass die Übertragung der Kanalzustandsdaten (frei oder besetzt) und die Nummer des zuletzt verwendeten Kanals dazu angewandt werden, die Signale zum teilweisen oder völligen sperren und Speisen der Sende- und Empfangskreise zu verarbeiten.

7. Datenübertragungssystem nach einem der Ansprüche 1 bis 6, dadurch gekennzeichnet, dass, wenn die Übertragung der Kanalzustandsdaten zum teilweisen oder völligen Sperren und Speisen der Sende- und Empfangskreise angewandt wird, der Übertragung eines Datenkanals nach mehreren freien Kanälen die Übertragung eines Taktkanals unmittelbar vorhergeht.

8. Datenübertragungssystem nach einem der Ansprüche 1 bis 7, dadurch gekennzeichnet, dass die Übertragung der Nummer des zuletzt verwendeten Kanals nur zum Verarbeiten der Signale zum teilweisen oder völligen Sperren und Speisen der Sende- und Empfangskreise angewandt wird.

9. Datenübertragungssystem nach einem der Ansprüche 1 bis 8 mit u.a. in der Anordnung zum Zurückverwandeln des Multiplexes und zum Steuern des Empfangskreises Raster- und Multi-Rasterverriegelungssuchanordnungen, die ein Rasterverriegelungsverlustsignal bzw. ein Multi-Rasterverriegelungssignal liefern, wenn ein Raster- bzw. Multi-Rasterverriegelungsverlust detektiert worden ist, dadurch gekennzeichnet, dass das System ausserdem in der Multiplexzurückverwandlungs- und Empfangskreissteueranordnung einen Alarmkreis aufweist, der ein Alarmsignal liefert, um nach Detektion von Raster- und/oder Multirasterverriegelungsverlusten den Befehl zur völligen Speisung des Empfangskreises zu erteilen.

10. Datenübertragungssystem nach einem der Ansprüche 1 bis 9, das über eine Anzahl von Stationen verfügt, die in der Übertragungsrichtung von den Fernstationen zu der Zentralstation das Prinzip des Vielfachzugriffs im Zeitmultiplex anwenden, dadurch gekennzeichnet, dass das System zum Gliedern der Datenpakete nebeneinanderliegend in dem Raster die erfindungsgemässen Mittel anwendet.

FIG.1

FIG.2

EP 0 200 275 B1

FIG.3

FIG.4

EP 0 200 275 B1

FIG.5

FIG. 6

FIG.7

FIG.8

FIG.9

EP 0 200 275 B1

FIG.10

FIG.11